# EUROPEAN PATENT APPLICATION

(11) **EP 2 966 503 A1**
(43) Date of publication of application: **13.01.2016**
(21) Application number: 14757244.0
(22) Date of filing: 14.01.2014
(51) Int. Cl.: G03B 37/00, G03B 15/00, H04N 5/225

(54) **WIDE-ANGLE IMAGING DEVICE**

(30) Priority: 27.02.2013 JP 2013036905
(71) Applicant: Omron Corporation, Kyoto-shi, Kyoto 600-8530 (JP)
(72) Inventor: CHUJO Hideki, Kyoto-shi Kyoto 600-8530 (JP); NAKAICHI Jun, Kyoto-shi Kyoto 600-8530 (JP); IGUCHI Seriya, Kyoto-shi Kyoto 600-8530 (JP); HOSOKAWA Hayami, Kyoto-shi Kyoto 600-8530 (JP); TANAKA Masayuki, Kyoto-shi Kyoto 600-8530 (JP)
(74) Representative: Kilian Kilian & Partner
(86) International application number: PCT/JP2014/050410
(87) International publication number: WO 2014/132681

(57) **Abstract**

A wide-angle imaging device 21 includes a camera 22 in which an imaging element 26 and a lens 27 are incorporated, a visual field switching optical system 23, and an optical system driving mechanism 28. The visual field switching optical system 23 includes a first prism 24 and a second prism 25, and the prisms 24 and 25 are arranged while vertically stacked. The prism 24 (25) refracts light incident from a visual field in a left (right) direction with respect to an optical axis direction to collect the light to the imaging element 26. The optical system driving mechanism 28 elevates and lowers the visual field switching optical system 23 to switch between a state in which one of the prisms 24 and 25 is located in front of the camera 22 and a state in which the prisms 24 and 25 are not in front of the camera 22. The imaging element 26 can sequentially photograph images of the left, front, and right visual fields while positions of the prisms 24 and 25 are switched.

## Description

### TECHNICAL FIELD

The present invention relates to a wide-angle imaging device. Specifically, the present invention relates to a wide-angle imaging device that can widely photograph an image through an optical system.

### BACKGROUND ART

Nowadays, in a monitoring camera or an image sensor, there is an increasing need to photograph a wider range (wider angle) using one imaging device. Conventionally, the following solutions are proposed to the need.

A first method is one in which the wide range can be photographed using a fish-eye lens. However, for the wide-angle imaging device provided with the fish-eye lens, because an image is largely distorted in a surrounding portion, a complicated correction needs to be performed using a microcomputer or a computer through image processing, and the microcomputer or the computer needs to have a high processing capability. For the use of the fish-eye lens, resolution of the image deteriorates because the surrounding image is reduced. Therefore, a higher-density imaging element needs to be used to increase cost of the wide-angle imaging device.

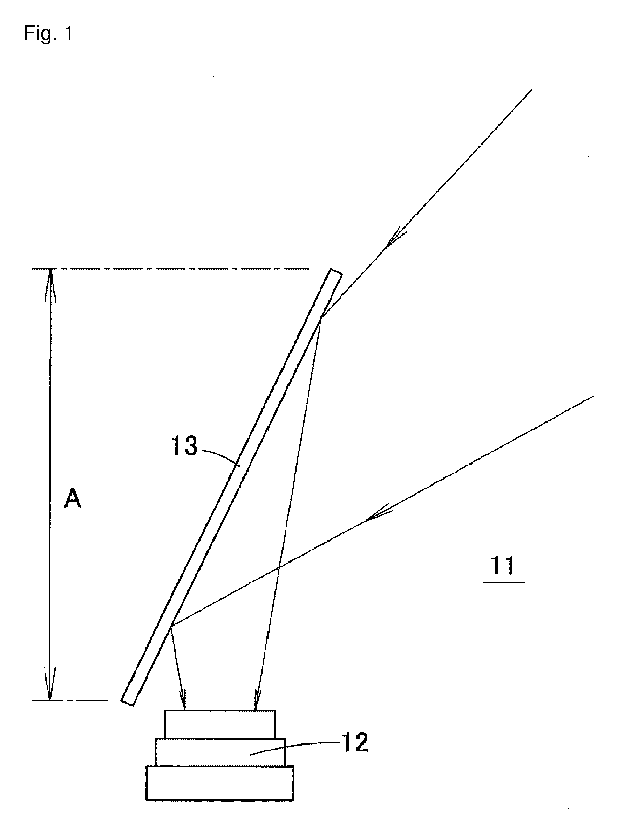

A second method is one in which an optical path is folded using a mirror to guide light beams from right and left visual fields to the imaging element. For example, Patent Document 1 discloses this type of wide-angle imaging device (panoramic imaging device). However, in a wide-angle imaging device 11 with such a configuration, when a direction inclined small with respect to a front of an imaging element 12 is photographed, a length A in a front-back direction of a mirror 13 increases due to spread of an angle of view, and an installation space of the mirror 13 increases, as illustrated in Fig. 1. Therefore, a length (thickness) in the front-back direction of the wide-angle imaging device increases, and a space where the wide-angle imaging device is incorporated in an instrument is also restricted. The drawback becomes prominent with decreasing light angle bent by the mirror.

A third method is one in which the wide range is photographed by rotating the wide-angle imaging device. However, in the third method, cables used for a power supply and input and output of a signal need to be also rotated because the imaging element that is of an electronic device is rotated. There is a risk of disconnecting the cable or a connection portion of the cable, and therefore durability and reliability of the wide-angle imaging device deteriorate.

### PRIOR ART DOCUMENT

### PATENT DOCUMENT

Patent Document 1: Japanese Unexamined Patent Publication No. 2009-232278

### SUMMARY OF THE INVENTION

### PROBLEMS TO BE SOLVED BY THE INVENTION

An object of the present invention is to provide a low-cost, high-reliability wide-angle imaging device in which the thickness in the front-back direction can be decreased using a refractive optical system.

### MEANS FOR SOLVING THE PROBLEM

According to a first aspect of the present invention, a wide-angle imaging device configured to photograph a range wider than an angle of view of an imaging element, the wide-angle imaging device includes: the imaging element configured to photograph an image; a visual field switching optical system including one or two or more optical elements, the optical element including a refractive type prism that refracts light incident from a visual field in a direction inclined with respect to an optical axis direction to collect the light to the imaging element; and an optical system driving mechanism configured to move the optical element of the visual field switching optical system.

In the wide-angle imaging device of the first aspect of the present invention, the optical element of the visual field switching optical system is moved and switched to be able to sequentially form the images of different visual field directions on the imaging element, so that the wide-range image can be photographed without enlarging the imaging element. The refractive type prism, which refracts the light incident from the visual field in a direction inclined with respect to the optical axis direction to collect the light to the imaging element, is used as the visual field switching optical system. Therefore, even in the case that the image is photographed in the direction inclined relatively small with respect to the optical axis direction, the thickness in the front-back direction of the visual field switching optical system hardly increases, and the compact wide-angle imaging device can be made.

In the wide-angle imaging device according to the first aspect of the present invention, for example, in the case that the visual field direction is switched while the visual field switching optical system includes two or more optical elements, the optical system driving mechanism may move the visual field switching optical system to selectively locate one of the optical elements of the visual field switching optical system on the optical axis. In the wide-angle imaging device according to the first aspect of the present invention, with all the optical elements of the visual field switching optical system located in positions shifted from the optical axis, the image of the optical axis direction may be photographed with no use of the optical element, or the image of the oblique direction may be photographed using the optical element.

In the wide-angle imaging device according to the first aspect of the present invention, the optical system driving mechanism may move each optical element by rotating the visual field switching optical system such that the optical element passes over the optical axis, or the optical system driving mechanism may move each optical element by linearly moving the visual field switching optical system such that the optical element passes over the optical axis.

In the wide-angle imaging device according to the first aspect of the present invention, the visual field switching optical system may include a reflective type prism or a mirror as the optical element, the reflective type prism or the mirror reflecting the light incident from the visual field in the direction inclined with respect to the optical axis direction to collect the light to the imaging element, and light incident from a visual field in a relatively small inclination direction with respect to the optical axis may be collected to the imaging element by the refractive type prism, and light incident from a visual field in a relatively large inclination direction with respect to the optical axis may be collected to the imaging element by the reflective type prism or the mirror. Accordingly, the wider-range image can be photographed.

In the wide-angle imaging device according to the first aspect of the present invention, a plurality of prisms in the optical elements constituting the visual field switching optical system may integrally be formed. In this case, the refractive type prisms may integrally be formed. In the case that the visual field switching optical system includes the reflective type prism, the refractive type prism and the reflective type prism may integrally be formed, or the reflective type prisms may integrally be formed.

As used herein, the prism means a transparent substance that refracts a traveling direction of the light entering a transparent medium. Particularly, the prism is called a refractive type prism in the case that the light is incident on the transparent medium and refracted at an interface with another transparent medium having a different refractive index. The prism is called a reflective type prism in the case that the light is incident on the transparent medium and reflected by the interface with another transparent medium having a different refractive index or by a surface processed into a mirror (for example, an evaporated film) formed on or in the transparent medium.

In the wide-angle imaging device according to the first aspect of the present invention, a vertical length may be longer than a horizontal length in a pixel region of the imaging element. Accordingly, the angle of view can be widened in a longitudinal direction (vertical direction) of the imaging element.

In the wide-angle imaging device according to the first aspect of the present invention, a surface on the imaging element side may be constructed with a concave curve in the refractive type prism. In the wide-angle imaging device according to the first aspect of the present invention, a surface on a photographing object side may be constructed with a convex curve in the refractive type prism. Accordingly, the distortion of the photographed image can be decreased.

In the wide-angle imaging device according to the first aspect of the present invention, an unnecessary portion of each of the optical elements may be removed with only a portion constituting an optical path of a light beam necessary for photographing being left, and the optical elements in which the unnecessary portions are removed may overlap each other when the optical elements are viewed from the side surface side with respect to an array direction of the optical elements with the optical elements in which the unnecessary portions are removed being adjacent to each other. Accordingly, the optical elements are arranged so as to come close to each other, so that the size of the visual field switching optical system can be reduced.

In the wide-angle imaging device according to the first aspect of the present invention, the optical elements may be arrayed in line when viewed in the optical axis direction, and the optical elements may be arranged such that visual field directions of the light beams incident on the imaging element through the optical elements are in alternate and opposite directions across the array direction of the optical elements. In the arrangement, because the optical paths of the optical elements adjacent to each other do not interfere with each other, the optical elements can be arranged while a distance between the optical elements is shortened, and the size of the wide-angle imaging device can further be reduced.

In the wide-angle imaging device according to the first aspect of the present invention, images of respective visual field directions may be arrayed and displayed on a monitor. Accordingly, entire circumstances are easily recognized because the images of respective directions, which are photographed while time is shifted, are displayed side by side.

According to a second aspect of the present invention, a wide-angle imaging device configured to photograph a range wider than an angle of view of an imaging element, the wide-angle imaging device includes: the imaging element configured to photograph an image; and two or more optical elements including refractive type prisms that refract light beams incident from visual fields in different directions inclined with respect to an optical axis direction to collect the light beams to the imaging element. At this point, the light beams, from respective visual field directions, passing through the optical elements are collected to different regions of the imaging element.

In the wide-angle imaging device of the second aspect of the present invention, the images of different visual field directions are formed on the imaging element at once by two or more optical elements, so that the wide-range image can be photographed. The refractive type prism, which refracts the light incident from the visual field in the direction inclined with respect to the optical axis direction to collect the light to the imaging element, is used as the visual field switching optical system. Therefore, even in the case that the image is photographed in the direction inclined relatively small with respect to the optical axis direction, the thickness in the front-back direction of the visual field switching optical system hardly increases, and the wide-angle imaging device can be downsized.

According to a third aspect of the present invention, a wide-angle imaging device configured to photograph a range wider than an angle of view of an imaging element, the wide-angle imaging device includes: the imaging element configured to photograph an image; and one or two or more optical elements including a refractive type prism that refracts light incident from a visual field in a direction inclined with respect to an optical axis direction to collect the light to the imaging element. At this point, light in the optical axis direction that does not pass through the optical element is collected to a region different from a region to which the light, from the visual field direction, passing through the optical element is collected in the imaging element.

In the wide-angle imaging device of the third aspect of the present invention, the images of different visual field directions are formed on the imaging element at once by one or two or more optical elements with no use of other optical elements, so that the wide-range image can be photographed. The refractive type prism, which refracts the light incident from the visual field in the direction inclined with respect to the optical axis direction to collect the light to the imaging element, is used as the visual field switching optical system. Therefore, even in the case that the image is photographed in the direction inclined relatively small with respect to the optical axis direction, the thickness in the front-back direction of the visual field switching optical system hardly increases, and the wide-angle imaging device can be downsized.

The wide-angle imaging device according to the second or third aspect of the present invention may further include a reflective type prism or a mirror that reflects the light incident from the visual field in the direction inclined with respect to the optical axis direction to collect the light to a partial region of the imaging element. At this point, light incident from a visual field in a relatively small inclination direction with respect to the optical axis is collected to the imaging element by the refractive type prism, and light incident from a visual field in a relatively large inclination direction with respect to the optical axis is collected to the imaging element by the reflective type prism or the mirror. Accordingly, the wider-range image can be photographed.

In the wide-angle imaging device according to the first, second, or third aspect of the present invention, distortion correction processing may be performed on images of different visual field directions, the images being photographed with the imaging element, and image processing may be performed on the images. Accordingly, the image processing is performed after the distortion correction processing is performed on the image, so that a load of the image processing can be reduced.

In the wide-angle imaging device having the reflective type prism or the mirror according to the first, second, or third aspect of the present invention, distortion correction processing may be performed on images of different visual field directions, the images being photographed with the imaging element, reverse correction processing may be performed on images of light which is reflected by the reflective type prism or the mirror and collected to the imaging element, and image processing may be performed on the images. Accordingly, the distortion correction processing is performed on the image, and the image processing is performed after the reverse correction processing is performed on the image of light which is reflected by the reflective type prism or the mirror and collected to the imaging element, so that the load of the image processing can be reduced. Orientations of the images can be aligned when the images are displayed on a monitor.

The wide-angle imaging device according to the first, second, or third aspect of the present invention can be incorporated in an electronic instrument. Examples of the electronic instrument in which the wide-angle imaging device is incorporated include an image sensor, a human body detection sensor, a face detection sensor, a car-mounted sensor, and other sensors. The wide-angle imaging device can also be incorporated in large-size electronic instruments such as an air conditioner and other home appliances.

In the present invention, the means for solving the problem has a feature that the above constituents are properly combined, and many variations can be made by the combinations of the constituents.

### BRIEF DESCRIPTION OF THE DRAWINGS

Fig. 1 is a schematic diagram illustrating a structure of a conventional wide-angle imaging device.
Fig. 2 is a perspective view illustrating a wide-angle imaging device according to a first embodiment of the present invention.
Fig. 3 is a perspective view illustrating an example of an optical system driving mechanism in the wide-angle imaging device of the first embodiment.
Figs. 4(A), 4(B), and 4(C) are schematic diagrams illustrating an operation of the wide-angle imaging device of the first embodiment.
Figs. 5(A), 5(B), and 5(C) are views illustrating a visual field range that can be photographed by an imaging element when the wide-angle imaging device of the first embodiment is in each of states in Figs. 4(A), 4(B), and 4(C); and Fig. 5(D) is a view illustrating an entire visual field range of the wide-angle imaging device of the first embodiment.
Fig. 6(A) is a schematic diagram illustrating a state in which objects are photographed with the wide-angle imaging device of the first embodiment; and Fig. 6(B) is a diagram illustrating a state in which an image photographed with the wide-angle imaging device in Fig. 6(A) is displayed on a monitor.
Fig. 7(A) is a perspective view illustrating integrally-formed two prisms; and Fig. 7(B) is a sectional view taken on line X-X in Fig. 7(A).
Figs. 8(A) and 8(B) are schematic diagrams illustrating different visual field switching optical systems; and Fig. 8(C) is a view illustrating a different sectional view of the prism.
Fig. 9 is a perspective view illustrating a wide-angle imaging device according to a second embodiment of the present invention.
Fig. 10 is a partially-exploded perspective view illustrating the wide-angle imaging device of the second embodiment.
Figs. 11 (A), 11(B), 11(C), and 11(D) are views illustrating states in which different prisms are arranged in front of a camera in the wide-angle imaging device of the second embodiment and respective visual field ranges; and Fig. 11(E) is a view illustrating the entire visual field range of the wide-angle imaging device of the second embodiment.
Fig. 12(A) is a schematic diagram illustrating a state in which objects are photographed with the wide-angle imaging device of the second embodiment; and Fig. 12(B) is a diagram illustrating a state in which the image photographed with the wide-angle imaging device in Fig. 12(A) is displayed on a monitor.
Fig. 13 is a partially-exploded perspective view illustrating another wide-angle imaging device of the second embodiment.
Fig. 14 is a view illustrating a visual field switching optical system in the wide-angle imaging device of the second embodiment.
Fig. 15(A) is a view illustrating a first prism in Fig. 14 when the first prism is viewed from a Y-direction in Fig. 14; Fig. 15(B) is a view illustrating the first prism in Fig. 14 when the first prism is viewed from a Z-direction in Fig. 14; Fig. 15(C) is a view illustrating a third prism in Fig. 14 when the third prism is viewed from the Y-direction in Fig. 14; and Fig. 15(D) is a view illustrating the third prism in Fig. 14 when the third prism is viewed from the Z-direction in Fig. 14.
Fig. 16 is a view illustrating the visual field switching optical system in which an arrangement of each prism is changed while an unnecessary portion is removed from the visual field switching optical system in Fig. 14.
Fig. 17(A) is a view illustrating the first prism in Fig. 16 when the first prism is viewed from a Y-direction in Fig. 16; Fig. 17(B) is a view illustrating the first prism in Fig. 16 when the first prism is viewed from a Z-direction in Fig. 16; Fig. 17(C) is a view illustrating the third prism in Fig. 16 when the third prism is viewed from the Y-direction in Fig. 16; and Fig. 17(D) is a view illustrating the third prism in Fig. 16 when the third prism is viewed from the Z-direction in Fig. 16.
Fig. 18 is a view illustrating the visual field switching optical system in which the arrangement of each prism is further changed from the visual field switching optical system in Fig. 16.
Figs. 19(A) and 19(B) are perspective views illustrating a visual field switching optical system in which a refractive type prism and a reflective type prism are integrated with each other.
Fig. 20 is a front view illustrating the visual field switching optical system in Figs. 19(A) and 19(B).
Fig. 21 (A) is a front view illustrating an optical block constituting the visual field switching optical system in Fig. 20; Fig. 21 (B) is a bottom view of Fig. 21 (A); and Figs. 21 (C) and 21(D) are left and right side views of Fig. 21 (B).
Figs. 22(A) and 22(B) are schematic perspective views illustrating a wide-angle imaging device according to a third embodiment of the present invention.
Figs. 23(A) and 23(B) are front views illustrating the wide-angle imaging device of the third embodiment.
Figs. 24(A) and 24(B) are front views illustrating a wide-angle imaging device according to a fourth embodiment of the present invention.
Fig. 25 is a perspective view illustrating a wide-angle imaging device according to a fifth embodiment of the present invention.
Fig. 26 is a view illustrating an image processor of the wide-angle imaging device.
Fig. 27 is a flowchart illustrating an image processing process performed by the image processor.
Fig. 28 is another flowchart illustrating the image processing process performed by the image processor.
Figs. 29(A) to 29(E) are schematic diagrams illustrating a state in which the image is corrected by the image processor.
Figs. 30(A), 30(B), and 30(C) are plan views illustrating refractive type prisms used in the wide-angle imaging device.
Figs. 31 (A) and 31 (B) are plan views illustrating other prisms used in the wide-angle imaging device.
Fig. 32 is a plan view illustrating the reflective type prism used in the wide-angle imaging device.
Fig. 33(A) is a front view illustrating the imaging element that is arranged such that a pixel region is landscape-oriented; Fig. 33(B) is a front view illustrating the imaging element that is arranged such that a pixel region is portrait-oriented; and Fig. 33(C) is a view illustrating a vertical angle of view of the imaging element.
Fig. 34 is a view illustrating an air conditioner installed indoors.

### DESCRIPTION OF SYMBOLS

- 21,51,71,81,91,102: WIDE-ANGLE IMAGING DEVICE
- 22: camera
- 23: visual field switching optical system
- 24: first prism
- 25: second prism
- 26: imaging element
- 26a: lower region
- 26b: upper region
- 28: optical system driving mechanism
- 41: monitor screen
- 47: pixel region
- 57: third prism
- 58: fourth prism
- 101: air conditioner

### MODES FOR CARRYING OUT THE INVENTION

Hereinafter, preferable embodiments of the present invention will be described with reference to the drawings. However, the present invention is not limited to the following embodiments, but various changes can be made without departing from the scope of the present invention.

### (First embodiment)

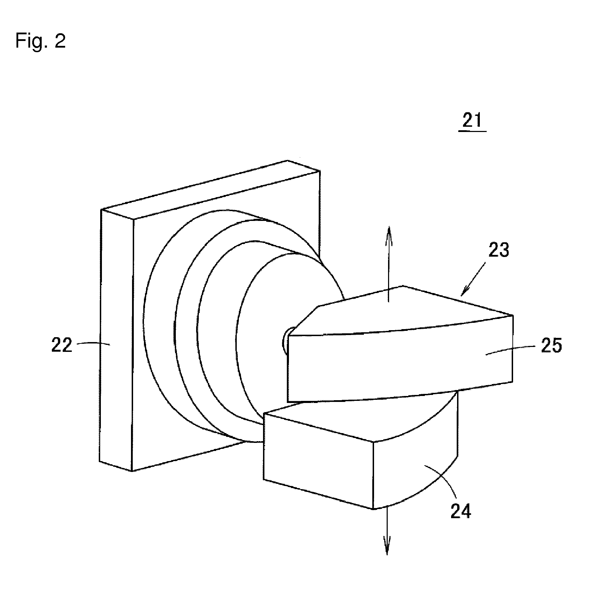

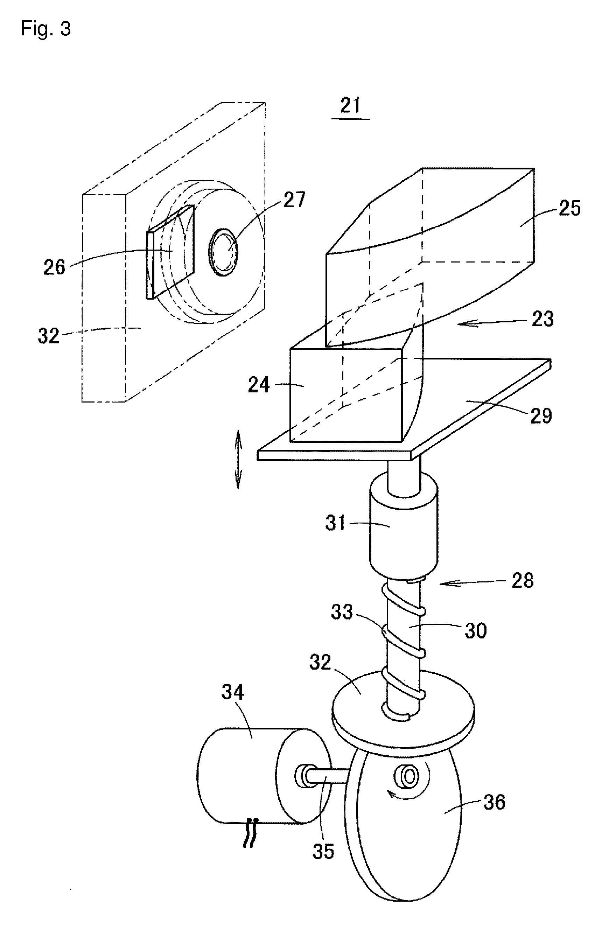

Fig. 2 is a perspective view illustrating a wide-angle imaging device 21 according to a first embodiment of the present invention. Fig. 3 is a perspective view illustrating an example of an optical system driving mechanism 28 in the wide-angle imaging device 21.

As illustrated in Fig. 2, the wide-angle imaging device 21 includes a camera 22 and a visual field switching optical system 23. In the visual field switching optical system 23, a first prism 24 and second prism 25, which are of the optical element, are vertically stacked on each other and vertically movable.

As illustrated in Fig. 3, the camera 22 includes an imaging element 26 such as a CCD and one or a plurality of image forming lenses 27. An image of light incident through the lens 27 is formed on the imaging element 26, and converted into an electric signal by the imaging element 26.

The visual field switching optical system 23 includes the refractive type of first prism 24 and the refractive type of second prism 25. The first prism 24 is fixed to a top surface of a table 29 using an adhesive agent. The second prism 25 is fixed to the top surface of the first prism 24 using the adhesive agent. The first prism 24 and the second prism 25 have an identical shape, and are arranged so as to be symmetrical with respect to a vertical surface that is parallel to an optical axis of the lens 27 and includes the optical axis of the lens 27.

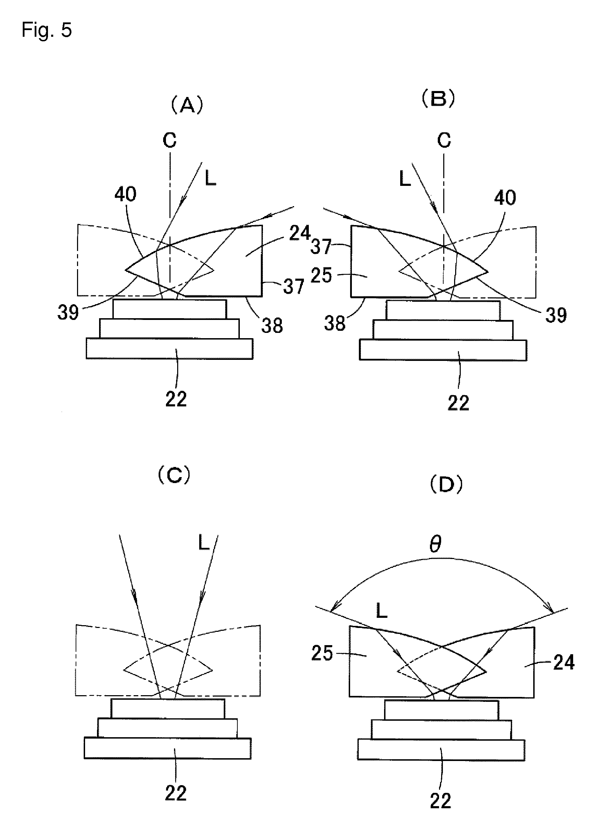

As illustrated in Figs. 5(A) and 5(B), each of the first prism 24 and the second prism 25 is surrounded by a top surface and a bottom surface, which are horizontal, a side surface 37, a back surface 38, an inclined surface 39, and a curved surface 40. The side surface 37 is orthogonal to the top surface and the bottom surface. The back surface 38 is orthogonal to the top surface, the bottom surface, and the side surface 37. The inclined surface 39 is located on a back surface side of each of the prisms 24 and 25, and inclined with respect to the back surface 38. The curved surface 40 is located on a front surface side of each of the prisms 24 and 25, and curved into an arc shape. The first and second prisms 24 and 25 are arranged such that an optical axis C of the lens 27 is perpendicular to the back surface 38, and such that the optical axis C of the lens 27 passes through the inclined surface 39 and the curved surface 40. The light of images, which is incident from a visual field inclined toward the side of the side surface 37 with respect to the optical axis C of the lens 27, is refracted by the curved surface 40 and the inclined surface 39, and formed on the imaging element 26 through the lens 27. That is, the first and second prisms 24 and 25 are arranged in front of the camera 22, which allows the camera 22 to photograph the image of a direction inclined relatively small with respect to the front direction (an optical axis direction of the imaging element 26 or the lens 27) of the camera 22.

The visual field switching optical system 23 is vertically moved by the optical system driving mechanism 28 as shown in Fig. 3. The optical system driving mechanism 28 includes the table 29 on which the visual field switching optical system 23 is installed, and the table 29 is fixed to an upper end of a slide shaft 30. The slide shaft 30 is inserted in a sleeve 31 that is fixed to a frame of an instrument incorporating the wide-angle imaging device 21, and the slide shaft 30 can vertically be slid while held by the sleeve 31. A cam abutment plate 32 is provided at a lower end of the slide shaft 30, and a spring 33 (compression spring) is interposed between a bottom surface of the sleeve 31 and a top surface of the cam abutment plate 32. A disc-shape cam 36 is located below the cam abutment plate 32, and the abutment plate 32 is fixed to a motor shaft 35 of a motor 34 at an eccentric position with respect to a center of the cam 36. Therefore, the cam abutment plate 32 is biased downward by an elastic force of the spring 33, and the bottom surface of the cam abutment plate 32 abuts on an outer circumferential surface of the cam 36.

In the optical system driving mechanism 28, when the motor 34 rotates the cam 36, the cam 36 pushes up the cam abutment plate 32 against the elastic force of the spring 33, and the slide shaft 30 is vertically moved between a top dead center and a bottom dead center. As a result, the optical system driving mechanism 28 vertically moves the first prism 24 and the second prism 25.

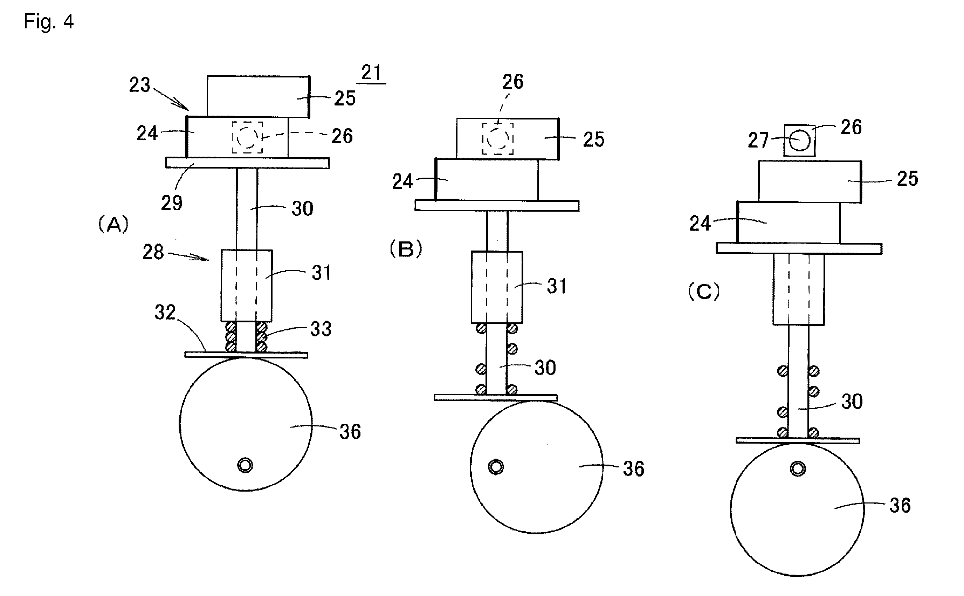

Figs. 4(A), 4(B), and 4(C) illustrate states in which the visual field switching optical system 23 is elevated and lowered by the optical system driving mechanism 28. Fig. 4(A) illustrates the state in which the table 29 is elevated to the top dead center by the optical system driving mechanism 28. At this point, the first prism 24 is located in front of the imaging element 26. Fig. 4(B) illustrates the state in which the table 29 is located at a middle point. At this point, the second prism 25 is located in front of the imaging element 26. Fig. 4(C) illustrates the state in which the table 29 is lowered to the bottom dead center by the optical system driving mechanism 28. At this point, the first and second prisms 24 and 25 are lowered below the imaging element 26, and the front of the imaging element 26 is opened.

Figs. 5(A), 5(B), and 5(C) illustrate states in which the image of a right, left, or front direction is photographed with the camera 22. Fig. 5(A) illustrates the case that the first prism 24 is located in front of the camera 22 as illustrated in Fig. 4(A). Light L from the right is incident on the camera 22 after refracted by the first prism 24, and the image of the right visual field is formed on the imaging element 26. Fig. 5(B) illustrates the case that the second prism 25 is located in front of the camera 22 as illustrated in Fig. 4(B). The light L from the left is incident on the camera 22 after refracted by the second prism 25, and the image of the left visual field is formed on the imaging element 26. Fig. 5(C) illustrates the case that both the first prism 24 and the second prism 25 are removed from the front of the camera 22 as illustrated in Fig. 4(C), and the image of the front visual field is formed on the imaging element 26. In the wide-angle imaging device 21, the photographing is performed with the camera 22 while the optical system driving mechanism 28 vertically moves the visual field switching optical system 23 as illustrated in Figs. 4(A) to 4(C), so that an angle of view θ can substantially be widened as illustrated in Fig. 5(D). Additionally, because the refractive type prism is used as the visual field switching optical system 23, the prism does not project largely even if the image of a direction having a relatively small inclination with respect to the optical axis is photographed, but the size (thickness) in a front-back direction of the wide-angle imaging device 21 can be reduced to easily incorporate the wide-angle imaging device 21 in the instrument.

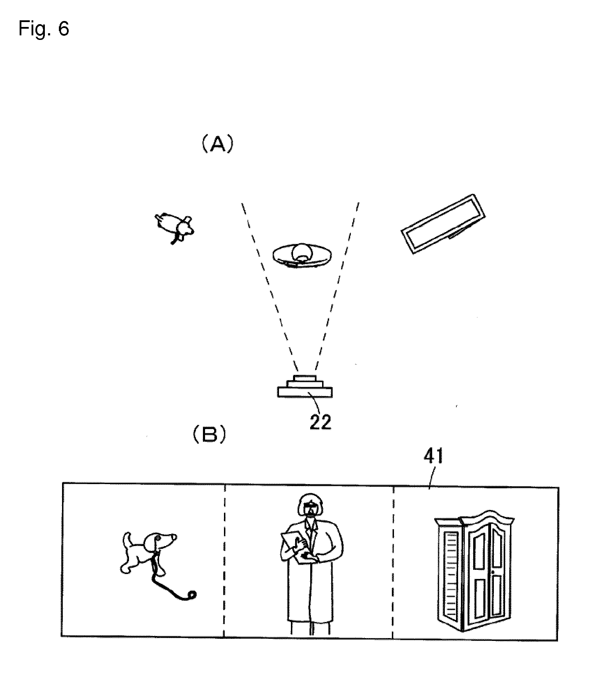

Fig. 6(A) illustrates a situation in which a person exists in front of the camera 22, a piece of furniture exists on the right, and a dog exists on the left. Although only the front person can be photographed (monitored) in the case that the visual field switching optical system 23 does not exist, the wide-angle imaging device 21 can also photograph the furniture in the right direction and the dog in the left direction by sequentially switching a level of the visual field switching optical system 23 as illustrated in Figs. 4(A) to 4(C). When the images of the left, front, and right directions are arrayed and displayed on a monitor screen 41 as illustrated in Fig. 6(B), a wide-angle panoramic image can be obtained to monitor a wide range.

Additionally, the image of a certain visual field direction can be photographed by the whole imaging element 26 by switching the prisms, so that an increase in size of the imaging element 26 is prevented to make the wide-angle imaging device 21 compact compared with the case that a pixel region (imaging region) of the imaging element is divided to photograph the images of respective visual field directions at once. In other words, the definition of the image can be improved compared to the imaging element having the identical size.

As a modification of the first embodiment, using one prism, that is, one of the prisms 24 and 25 for example, the state in which the prism is located in front of the camera and the state in which the prism is not located in front of the camera may be switched to monitor the visual field in front of the camera and one of the visual fields in the right and left oblique directions. In contrast, three or more prisms can be used as the optical element to photograph the images of different visual field directions. Alternatively, combination with a reflective type prism and a mirror (to be described later) may be employed as the optical element.

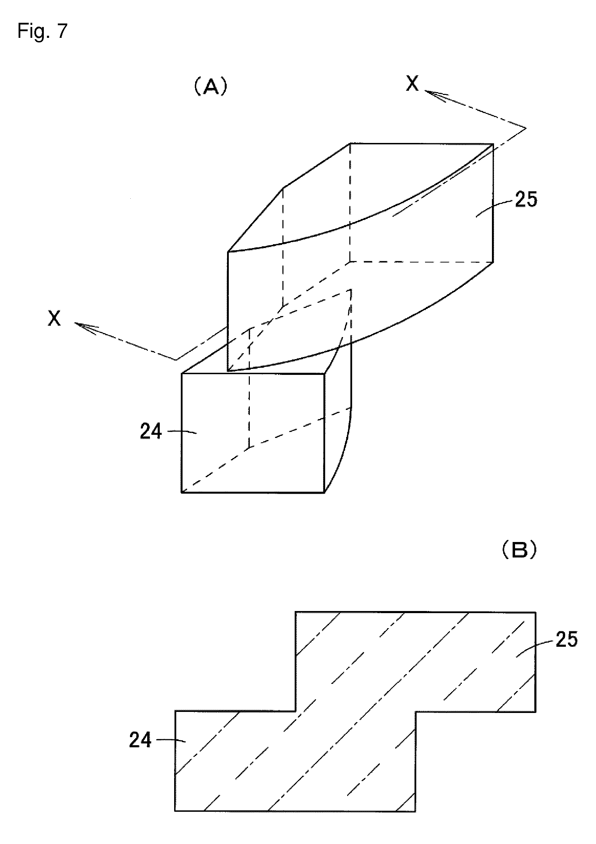

In the case that a plurality of prisms are used, the prisms may integrally be formed. For example, Figs. 7(A) and 7(B) illustrate a visual field switching optical system in which two refractive type prisms 24 and 25 are integrally formed.

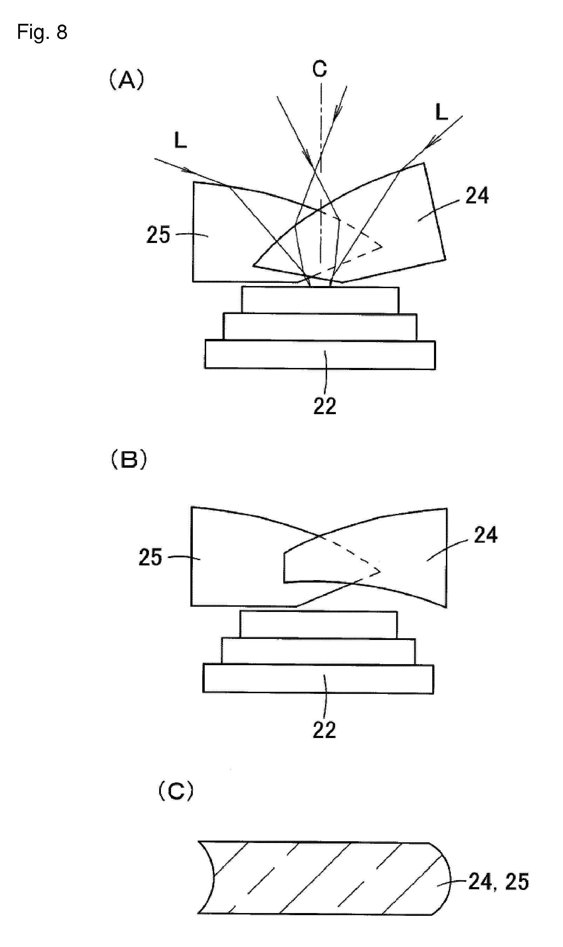

In the first embodiment, the prisms having the identical two-dimensional shape are symmetrically arranged. However, the visual field switching optical system 23 is not limited to the optical system of the first embodiment. For example, as illustrated in Fig. 8(A), the prisms having the identical shape may be used as the prisms 24 and 25 and asymmetrically arranged. As illustrated in Fig. 8(B), the prisms having different shapes may be combined as the prisms 24 and 25. The prisms asymmetrically arranged, or the prisms having the different shapes combined allow the images of visual field directions different between the right and left to be photographed. A horizontal section of the prism may be changed. For example, as illustrated in Fig. 8(C), one or two or more surfaces of the prisms 24 and 25 may be curved along the vertical direction. When one of the surfaces is vertically curved, distortion of the image can vertically be corrected. These changes on the prism are also applied to the following embodiments.

### (Second embodiment)

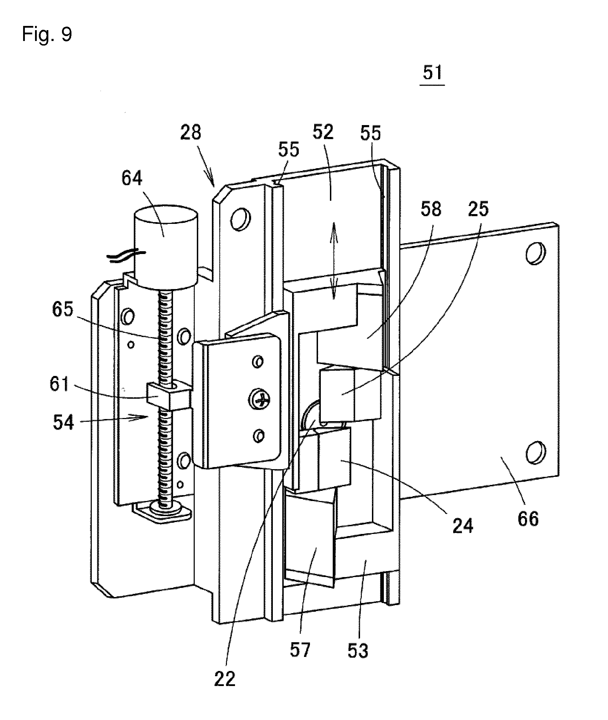

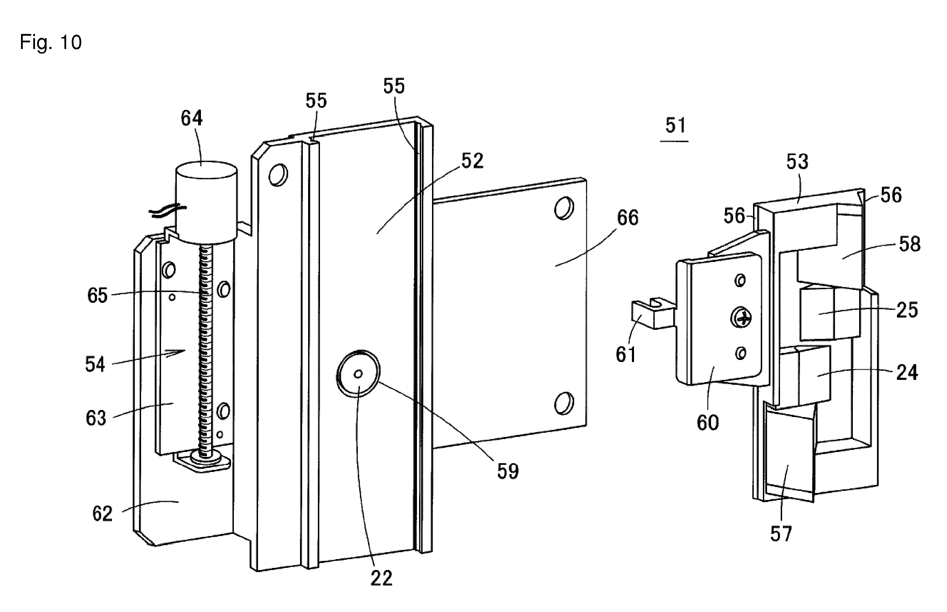

Fig. 9 is a perspective view illustrating a wide-angle imaging device 51 according to a second embodiment of the present invention. Fig. 10 is a partially-exploded perspective view of the wide-angle imaging device 51.

An optical system driving mechanism 28 of the wide-angle imaging device 51 includes a guide rail 52, a slider 53 that moves along the guide rail 52, and a driver 54 that moves the slider 53. The guide rail 52 includes two rail grooves 55 that extend in the vertical direction. An opening 59 is provided between the rail grooves 55 of the guide rail 52, and the front surface of the camera 22 is exposed at the opening 59.

The slider 53 includes projections 56 that are fitted in the rail grooves 55 of the guide rail 52 on both side surfaces. The projections 56 of the slider 53 are slidably fitted in the rail grooves 55 of the guide rail 52, and the slider 53 is vertically slidable along the rail grooves 55. The slider 53 substantially has a frame shape. The refractive type first prism 24, the refractive type second prism 25, a reflective type third prism 57, and a reflective type fourth prism 58, which are of the optical element, are held inside the slider 53. In the prisms 57 and 58, a metal evaporated film is formed on the surface of the prisms 57 and 58 or in the prisms 57 and 58 to provide a mirror surface (57a and 58a). The reflective type prisms 57 and 58 may totally reflect the light at an interface (surface) with air, or a mirror such as a metal mirror may be used instead of the reflective type prisms 57 and 58.

A female screw is formed on an inner surface of a substantial U-shape female screw unit 61, and a fixing unit 60 of the female screw unit 61 is screwed on the side surface of the slider 53. On the other hand, an attaching unit 62 extends from a lateral side of the guide rail 52, and the driver 54 is fixed to the attaching unit 62. In the driver 54, a motor 64 (for example, a pulse step motor and a servo motor) is fixed to a top surface of a screw shaft supporting plate 63. A lower end of a screw shaft 65 is pivoted on the bottom surface of the screw shaft supporting plate 63, and an upper end of the screw shaft 65 is coupled to the motor 64. When the slider 53 is attached to the guide rail 52, the female screw of the female screw unit 61 is pressed against the screw shaft 65 to engage the screw shaft 65. The camera 22 is mounted on a circuit board 66.

When the motor 64 normally or reversely rotates the screw shaft 65, the female screw unit 61 engaged with the screw shaft 65 travels along an axial direction of the screw shaft 65, thereby vertically moving the slider 53.

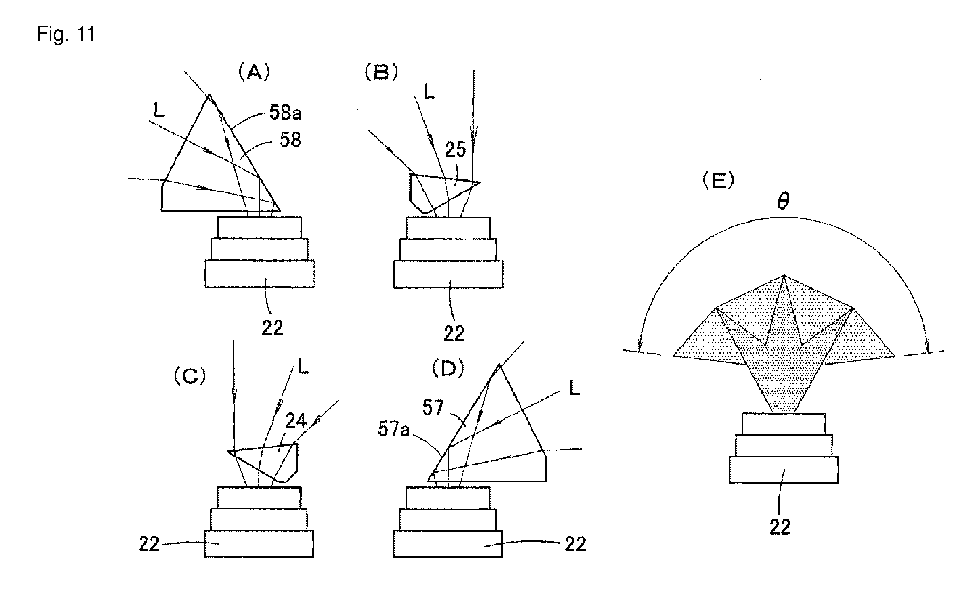

As illustrated in Figs. 11 (C) and 11 (B), similarly to the first embodiment, the first prism 24 and the second prism 25 collect the light from the direction inclined relatively small with respect to the optical axis C to the imaging element 26. As illustrated in Figs. 11(D) and 11(A), the third prism 57 and the fourth prism 58 collect the light from the direction inclined relatively large with respect to the optical axis C to the imaging element 26. Although the first prism 24 and the second prism 25 collect the light from the direction inclined relatively small with respect to the optical axis C to the imaging element 26, the prisms 24 and 25 collect the light by refracting the transmitted light beam, so that the thicknesses in the front-back directions of the prisms 24 and 25 can be decreased. Although the third prism 57 and the fourth prism 58 collect the light by reflecting the light beam on wall surfaces (mirror surfaces 57a and 58a) of the prisms, the prism 57 and 58 collect the light from the direction inclined relatively large with respect to the optical axis C to the imaging element 26, so that the thicknesses in the front-back directions of the prisms 57 and 58 can relatively be decreased.

As illustrated in Figs. 11 (A) to 11 (D), each of the prisms 57, 24, 25, and 58 can be placed in front of the camera 22 by moving the slider 53 and immobilized. Accordingly, the prisms 57, 24, 25, and 58 are sequentially immobilized in front of the camera 22 to perform the photographing with the camera 22, which allows the wide angle of view θ (angle of view) to be monitored as illustrated in Fig. 11(E).

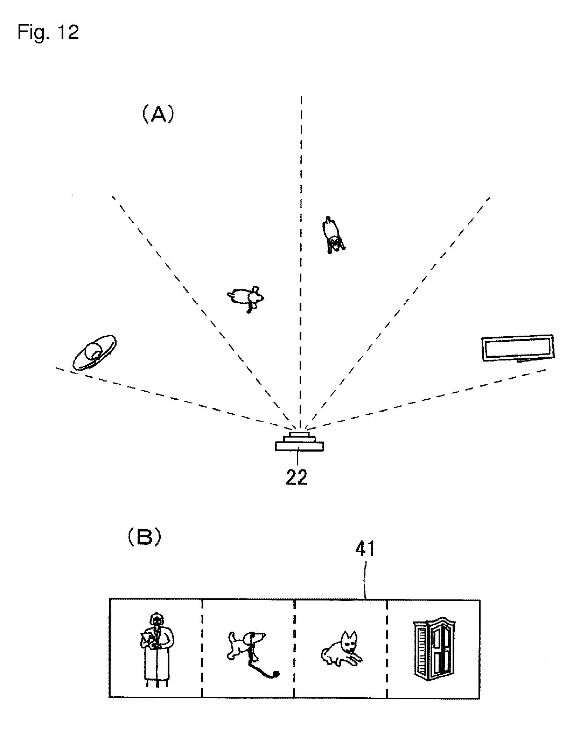

In Fig. 12(A), dogs exist ahead of the camera 22 on the right and left, a person stand at a left end, and a piece of furniture exists at a right end. In the wide-angle imaging device 51, the photographing is performed while the positions of the prisms 58, 25, 24, and 57 are sequentially switched as illustrated in Figs. 11(A) to 11(D), which allows the photographing to be performed while the visual field directions are switched. When the photographed images are arrayed and displayed on a monitor screen 41 as illustrated in Fig. 12(B), the wide-angle panoramic image can be obtained to monitor the wide range.

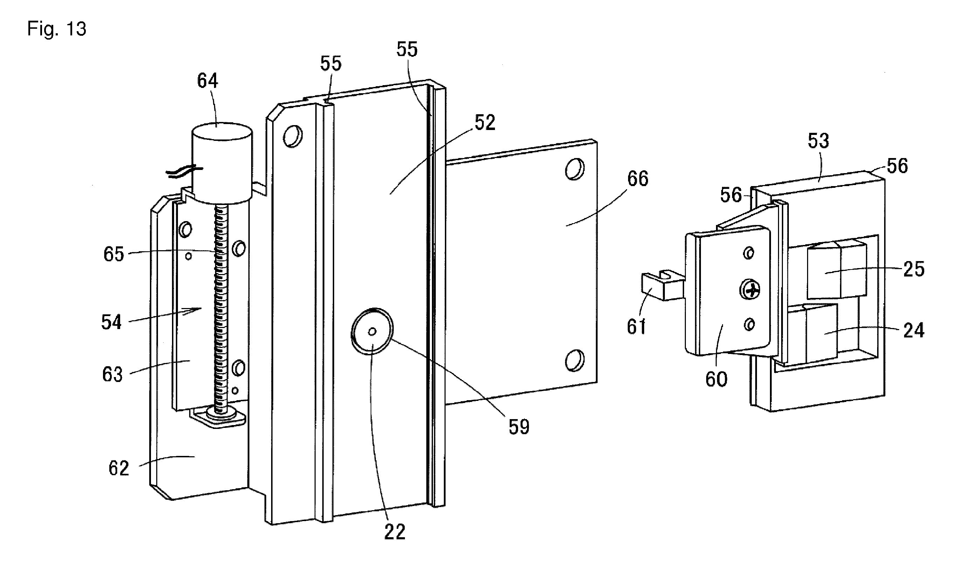

The optical system driving mechanism 28 of the second embodiment can also be used in the case that two or three prisms or mirrors are moved, or in the case that five or more prisms or mirrors are moved. Fig. 13 illustrates an example of the wide-angle imaging device in which the prisms 24 and 25 are attached to the slider 53.

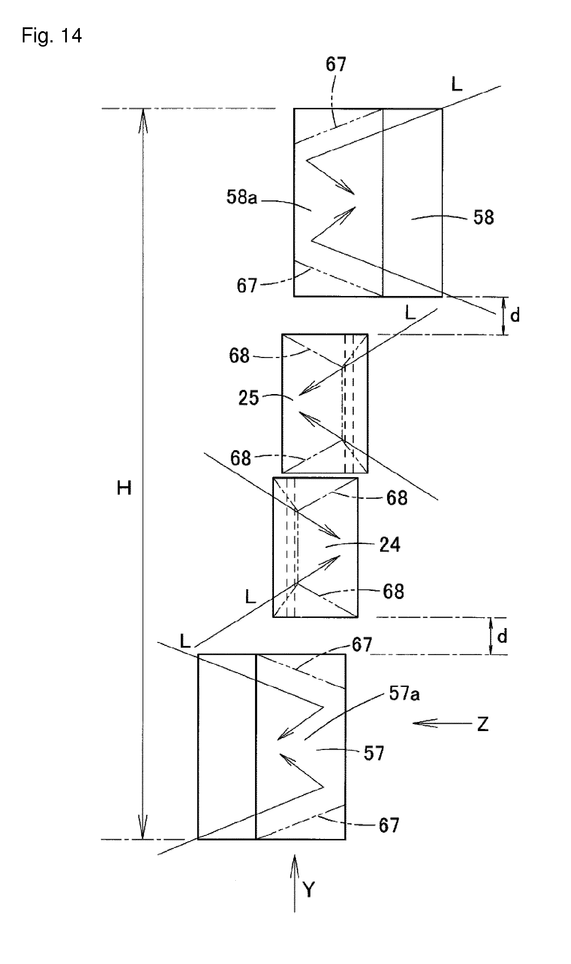

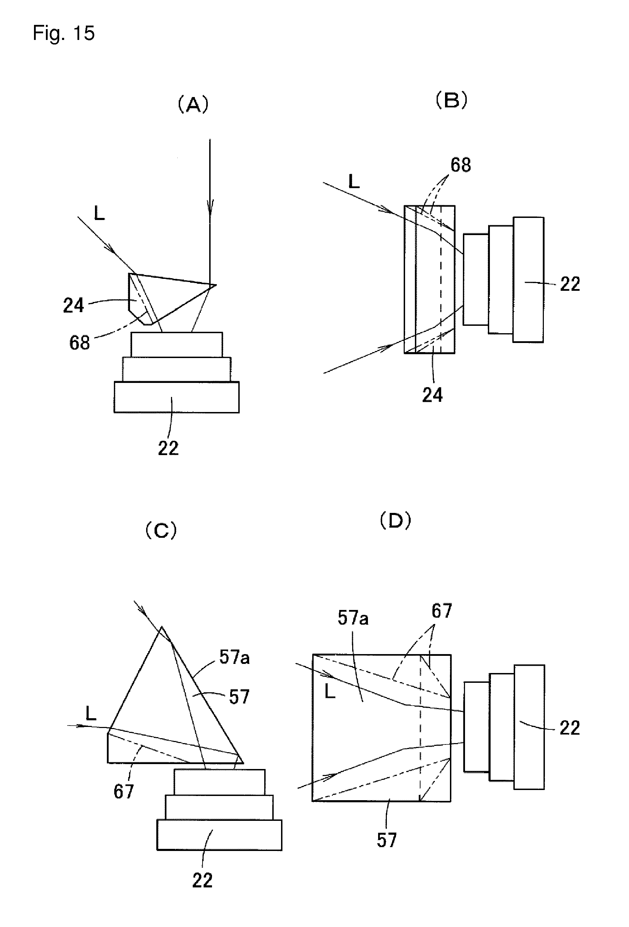

The visual field switching optical system 23, that is, the visual field switching optical system 23 of the second embodiment for example, can be downsized as follows. Fig. 14 is a front view illustrating the prisms 58, 25, 24, and 57 used in the visual field switching optical system 23 of the second embodiment. Figs. 15(A) and 15(B) are a bottom view illustrating the first prism 24 viewed from a Y-direction and a side view illustrating the first prism 24 viewed from a Z-direction (a bottom view of the second prism 25 viewed from the Y-direction and a side view of the second prism 25 viewed from the Z-direction are symmetrical with the bottom view of the first prism 24 in Fig. 15(A) and the side view of the first prism 24 in Fig. 15(B), respectively). Figs. 15(C) and 15(D) are a bottom view illustrating the third prism 57 viewed from the Y-direction and a side view illustrating the third prism 57 viewed from the Z-direction (a bottom view of the fourth prism 58 viewed from the Y-direction and a side view of the fourth prism 58 viewed from the Z-direction are symmetrical with the bottom view of the third prism 57 in Fig. 15(C) and the side view of the third prism 57 in Fig. 15(D), respectively).

The light beam L indicated in the third prism 57 and fourth prism 58 of Fig. 14 and the light beam L indicated in the third prism 57 of Figs. 15(C) and 15(D) (for the fourth prism 58, the light beam L is indicated in drawings symmetrical with Figs. 15(C) and 15(D)) express the light in a substantial boundary portion in the light that is collected from the visual field to the imaging element 26 by the prisms 57 and 58. Because the portion located outside the light L is not necessary for the prisms 57 and 58, the prisms 57 and 58 are cut along an alternate long and short dash line 67 that is located slightly outside the light L in Figs. 14, 15(C), and 15(D). That is, upper and lower portions of the prisms 57 and 58 are obliquely cut as illustrated in Figs. 14 and 15(D), and back surfaces of the prisms 57 and 58 are also obliquely cut as illustrated in Fig. 15(C).

Similarly, the light beam L indicated in the first prism 24 and second prism 25 of Fig. 14 and the light beam L indicated in the first prism 24 of Figs. 15(A) and 15(B) (for the second prism 25, the light beam L is indicated in drawings symmetrical with Figs. 15(A) and 15(B)) express the light in the substantial boundary portion in the light that is collected from the visual field to the imaging element 26 by the prisms 24 and 25. Because the portion located outside the light L is not necessary for the prisms 24 and 25, the prisms 24 and 25 are cut along an alternate long and short dash line 68 that is located slightly outside the light L in Figs. 14, 15(A), and 15(B). That is, the upper and lower portions of the prisms 24 and 25 are obliquely cut as illustrated in Figs. 14 and 15(B), and the back surfaces of the prisms 24 and 25 are also obliquely cut as illustrated in Fig. 15(A).

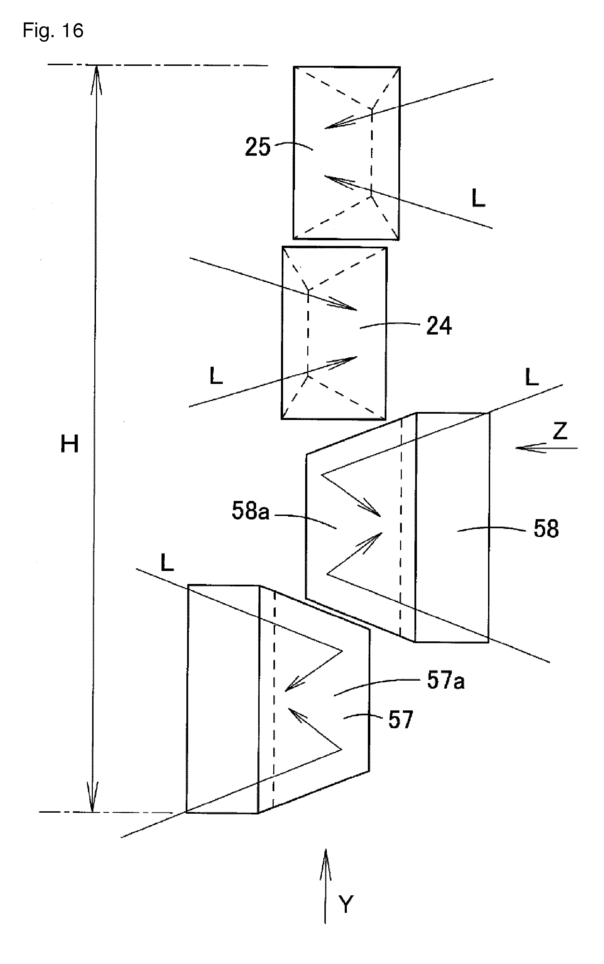

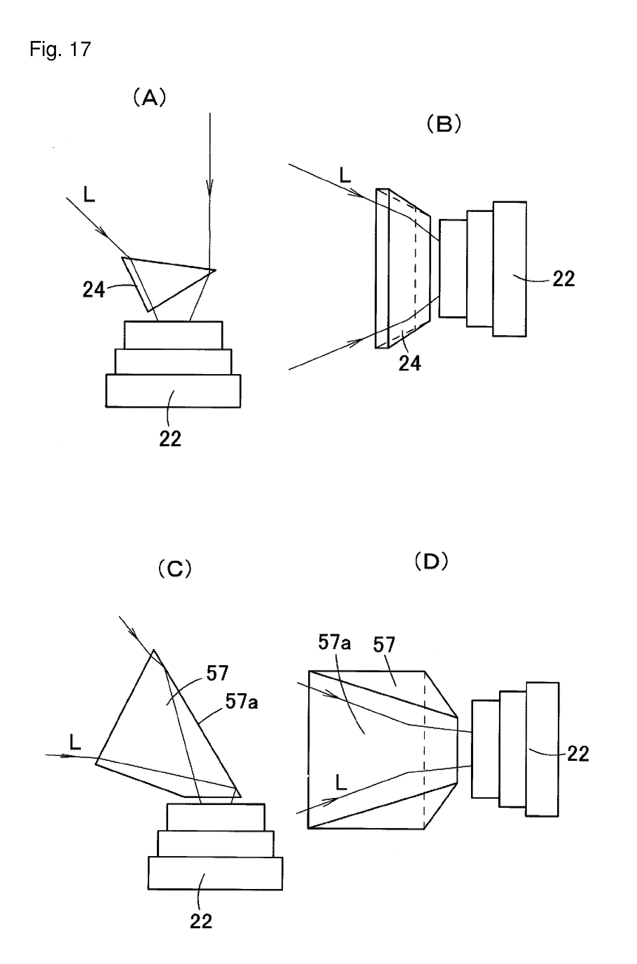

Fig. 16 is a front view illustrating the first prism 24, the second prism 25, the third prism 57, and the fourth prism 58, in which the unnecessary portions are cut. Figs. 17(A) and 17(B) are a bottom view illustrating the post-cutting first prism 24 viewed from the Y-direction and a side view illustrating the post-cutting first prism 24 viewed from the Z-direction (the bottom view of the second prism 25 viewed from the Y-direction and the side view of the second prism 25 viewed from the Z-direction are symmetrical with the bottom view of the first prism 24 in Fig. 17(A) and the side view of the first prism 24 in Fig. 17(B), respectively). Figs. 17(C) and 17(D) are a bottom view illustrating the post-cutting third prism 57 viewed from the Y-direction and a side view illustrating the post-cutting third prism 57 viewed from the Z-direction (the bottom view of the fourth prism 58 viewed from the Y-direction and the side view of the fourth prism 58 viewed from the Z-direction are symmetrical with the bottom view of the third prism 57 in Fig. 17(C) and the side view of the third prism 57 in Fig. 17(D), respectively). In the visual field switching optical system of Fig. 16, the prisms 24, 25, 57, and 58 are rearranged such that the third prism 57 and the fourth prism 58 are adjacent to each other. When the third prism 57 and the fourth prism 58 are adjacent to each other, the obliquely-cut portions of the prisms 57 and 58 are brought close to each other, so that a height H (the length of the visual field switching optical system viewed from the Z-direction) can be decreased in the prism arrangement region to downsize the wide-angle imaging device 51.

In the arrangement of Fig. 14, the visual field direction (or the direction of the light incident on each prism) of the light L incident on the camera 22 through each of the prisms 58, 25, 24, and 57 is the right direction for the fourth prism 58 and the second prism 25, and is the left direction for the first prism 24 and the third prism 57. When the visual field directions of the light beams incident on the adjacent prisms are identical to each other, the optical paths are blocked by or interfere with each other. Therefore, as illustrated in Fig. 14, in order to prevent the interference of the optical path, it is necessary to widen an interval d between the prisms in which the visual field directions are identical, which results in the increase of the height H in the prism arrangement region. On the other hand, in the arrangement of Fig. 16, the visual field directions of the light beams L incident on the camera 22 through the prisms 25, 24, 57, and 58 are alternate right and left directions. When the visual field directions of the light beams incident on the adjacent prisms are alternate and opposite directions, the optical paths are hardly blocked by or hardly interfere with each other, so that the height H can be decreased in the prism arrangement region to further downsize the wide-angle imaging device 51.

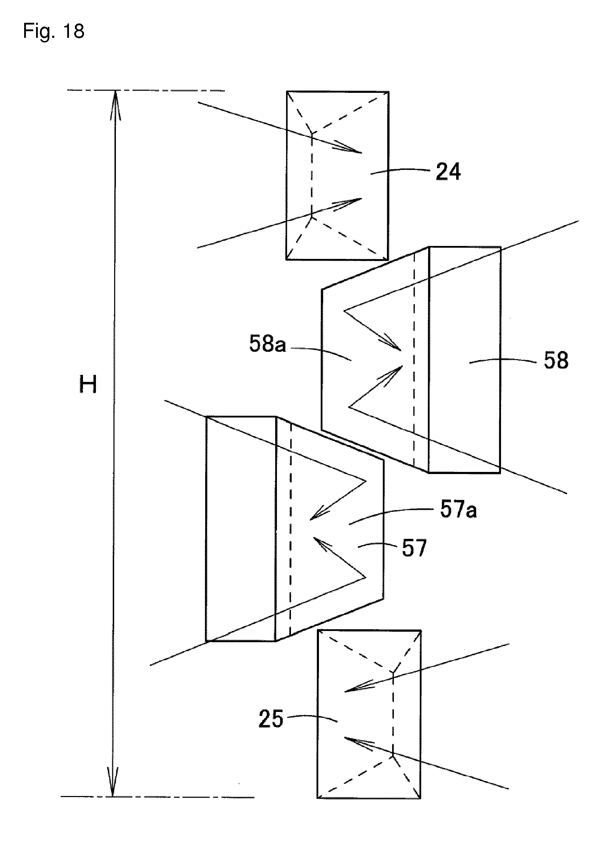

Fig. 18 is a front view illustrating a further downsized visual field switching optical system. In the visual field switching optical system of Fig. 18, the third prism 57 and the fourth prism 58 are arranged adjacent to each other, the first prism 24 is arranged above the fourth prism 58, and the second prism 25 is arranged below the third prism 57. Therefore, the obliquely-cut portions of the third and fourth prisms 57 and 58 can be brought close to each other, the first prism 24 can be arranged while entering the cut portion of the fourth prism 58, and the second prism 25 can be arranged while entering the cut portion of the third prism 57. As a result, compared with the case that the first prism 24 and the second prism 25 are arranged adjacent to each other as illustrated in Fig. 16, the height H can be decreased in the prism arrangement region to further downsize the wide-angle imaging device 51.

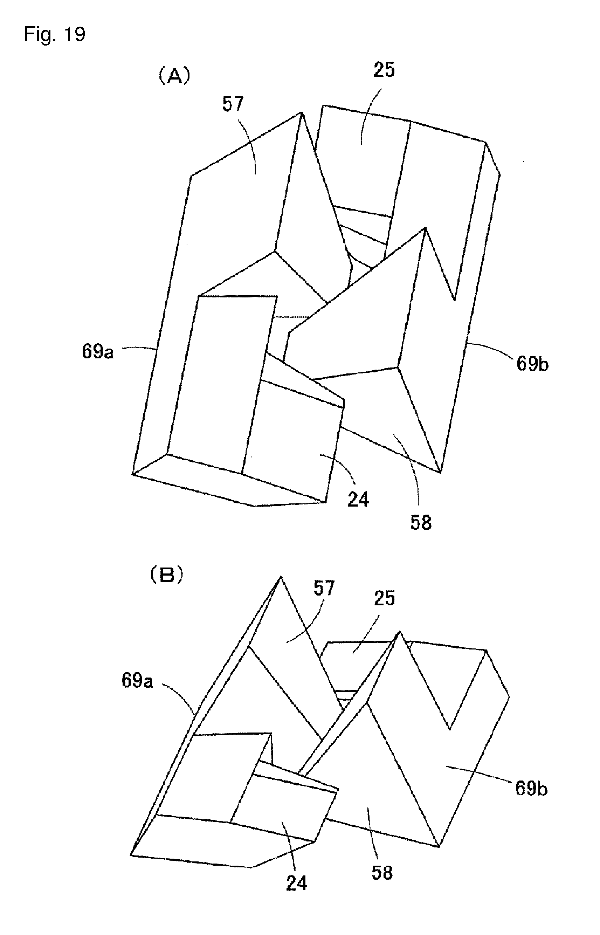

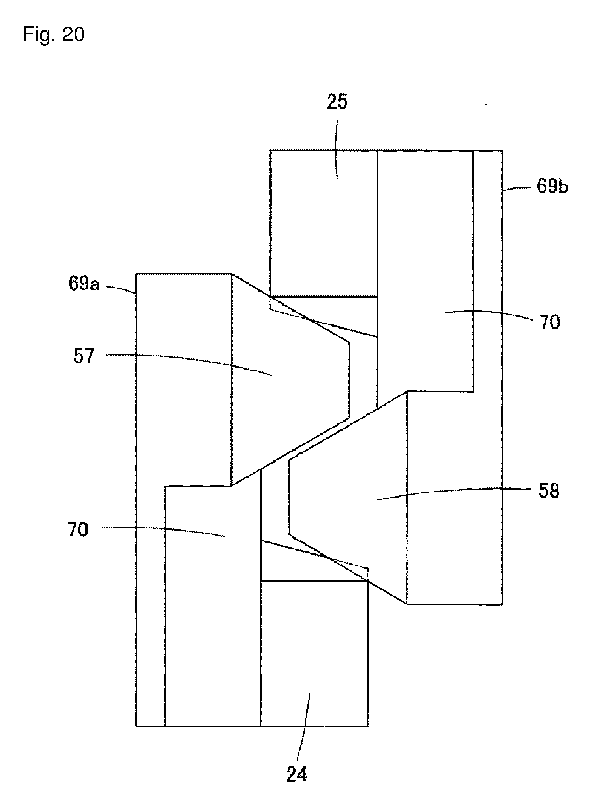

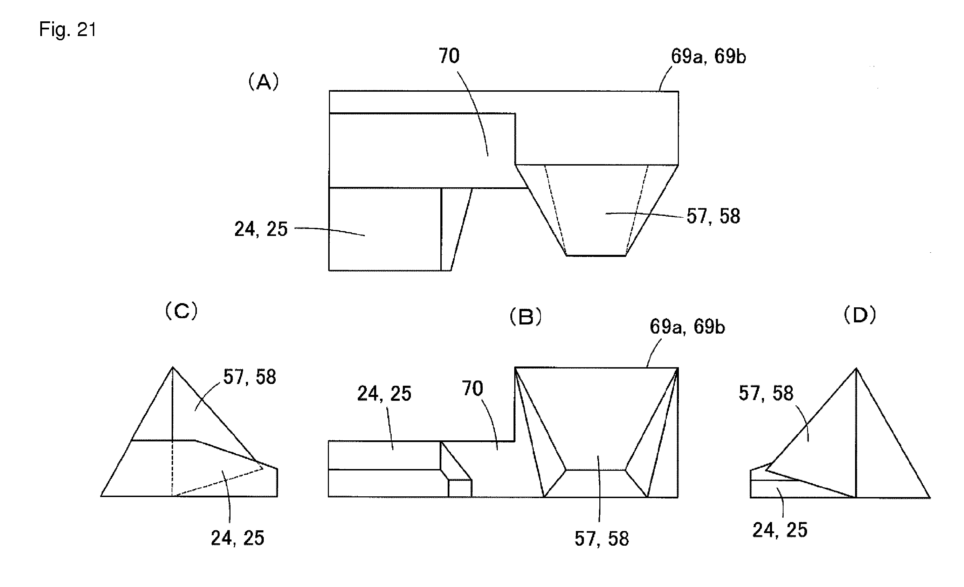

Figs. 19(A) and 19(B) are perspective views illustrating a visual field switching optical system provided with optical blocks 69a and 69b in which the prisms are integrated with each other. Fig. 20 is a front view of the visual field switching optical system. Figs. 21 (A) to 21(D) are a front view, a bottom view, a left side view, and a right side view of the optical blocks 69a and 69b. In the optical block 69a, the first prism 24 and the third prism 57 are integrally formed, and the prisms 24 and 57 are coupled to each other by a coupler 70. Similarly, in the optical block 69b, the second prism 25 and the fourth prism 58 are integrally formed, and the prisms 25 and 58 are coupled to each other by the coupler 70. The visual field switching optical system having the arrangement substantially similar to that in Fig. 18 is configured by a combination of the optical block 69a and the optical block 69b. In the visual field switching optical system of Figs. 19(A) to 21(D), top and bottom surfaces of the prisms 57 and 58 are inclined so as to be shrunk rearward, and the ends of the front surfaces of the prisms 24 and 25 are obliquely cut. Therefore, as illustrated in Fig. 20, the first prism 24 and the fourth prism 58 partially overlap each other when viewed from the front, and the second prism 25 and the third prism 57 partially overlap each other when viewed from the front, so that the height (H) can be decreased in the prism arrangement region.

### (Third embodiment)

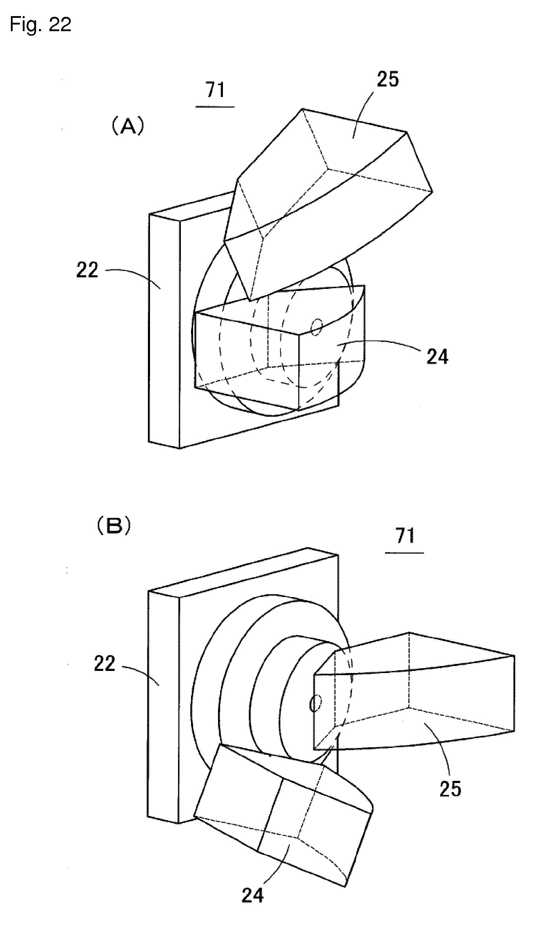

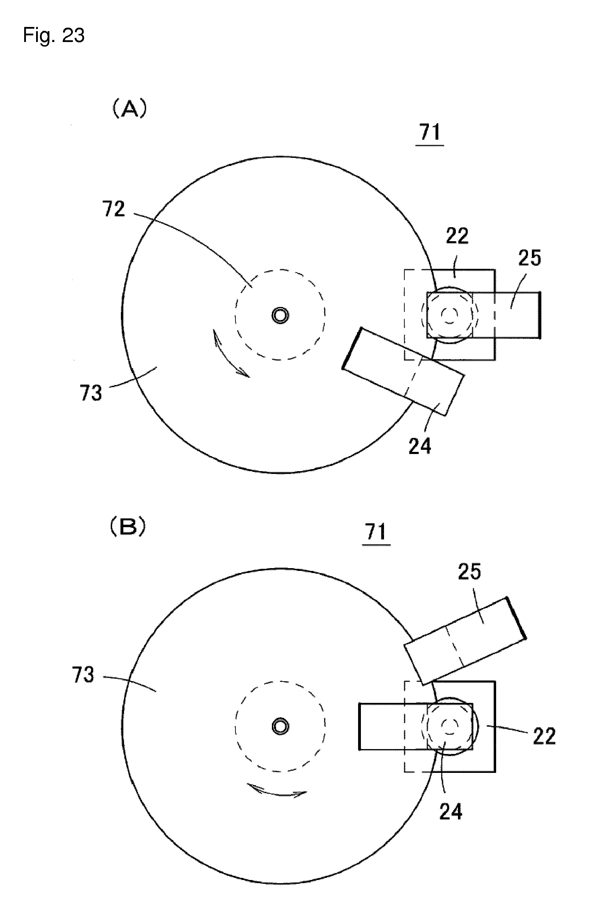

Figs. 22(A) and 22(B) are perspective views schematically illustrating a wide-angle imaging device 71 according to a third embodiment of the present invention. Figs. 23(A) and 23(B) are front views illustrating a structure and an operation of the wide-angle imaging device 71. In the wide-angle imaging device 71 of the third embodiment of the present invention, the first prism 24 and the second prism 25 are rotated and switched.

As illustrated in Figs. 23(A) and 23(B), in the wide-angle imaging device 71, the first prism 24 and the second prism 25 are fixed to an outer circumferential portion of a rotating table 73 rotated by a motor 72. The first prism 24 and the second prism 25 are fixed so as to partially protrude from an edge of the rotating table 73 at the positions shifted in the circumferential direction of the outer circumferential portion of the rotating table 73. The motor 72 rotates the rotating table 73 to arrange the first prism 24 or the second prism 25 in front of the camera 22. In the third embodiment, the structure of the optical system driving mechanism 28 can be simplified.

The third embodiment can be applied to the case of three or more prisms.

### (Fourth embodiment)

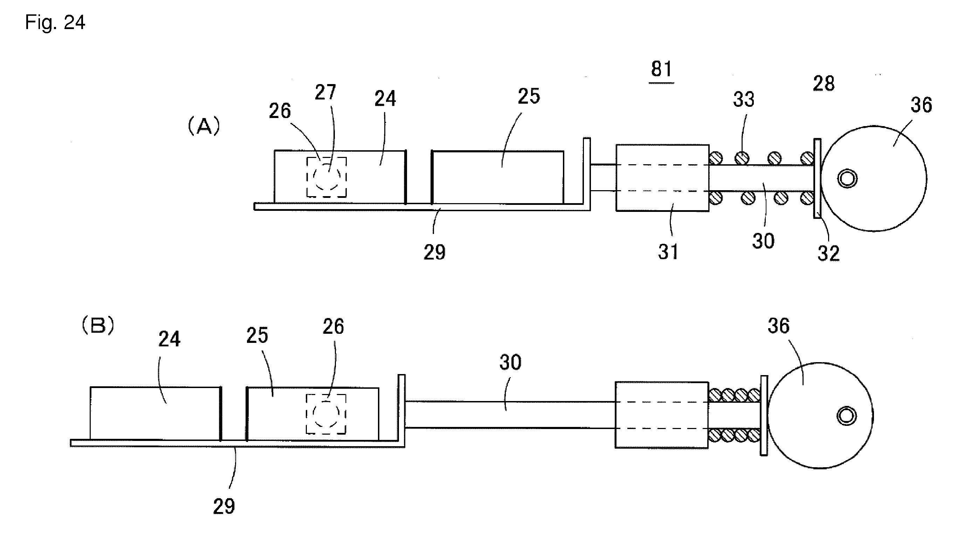

Figs. 24(A) and 24(B) are front views illustrating a structure and an operation of a wide-angle imaging device 81 according to a fourth embodiment of the present invention. In the wide-angle imaging device 81 of the fourth embodiment of the present invention, the first prism 24 and the second prism 25 are horizontally arranged, the optical system driving mechanism 28 of the fourth embodiment has a structure in which the optical system driving mechanism 28 of the first embodiment is laid, and the first prism 24 and the second prism 25 are horizontally moved and switched.

Although not illustrated, the optical system driving mechanism 28 of the fourth embodiment can have a structure in which the optical system driving mechanism 28 of the second embodiment is laid.

### (Fifth embodiment)

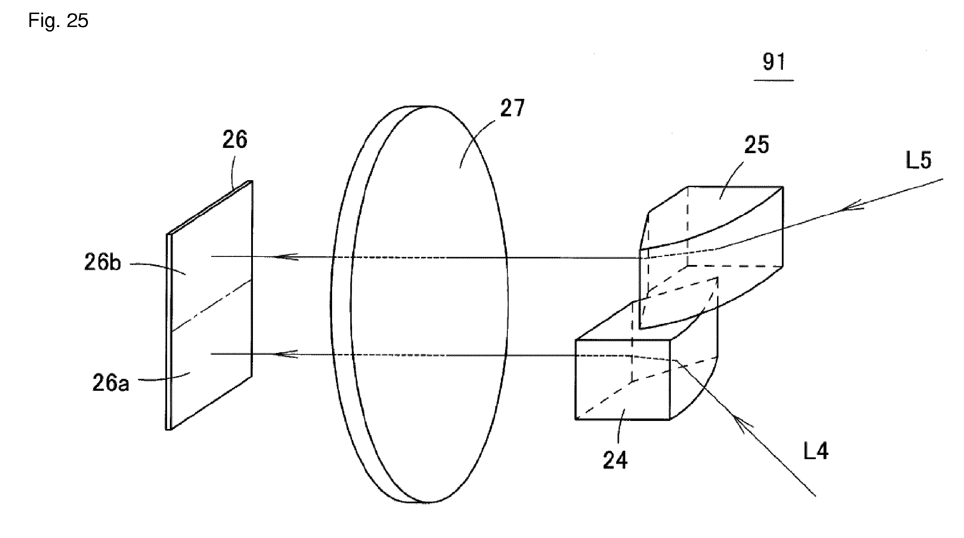

Fig. 25 is a perspective view schematically illustrating a wide-angle imaging device 91 according to a fifth embodiment of the present invention. In the wide-angle imaging device 91, the imaging element 26 is arranged such that the pixel region is portrait-oriented, the pixel region of the imaging element 26 is virtually divided into a lower region 26a and an upper region 26b, the first prism 24 is arranged while facing the lower region 26a, and the second prism 25 is arranged while facing the upper region 26b. Therefore, light L4 from the right visual field is refracted by the first prism 24, and the image of the light L4 is formed in the lower region 26a by the lens 27. Light L5 from the left visual field is refracted by the second prism 25, and the image of the light L5 is formed in the upper region 26b by the lens 27. In the fifth embodiment, the images of the right and left visual fields can simultaneously be monitored to eliminate the necessity of the optical system driving mechanism.

### (Image processing)

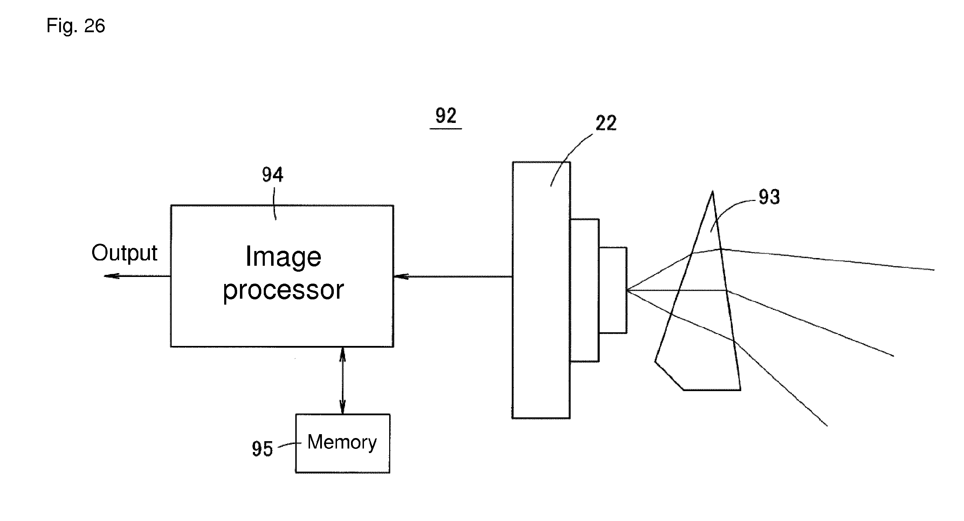

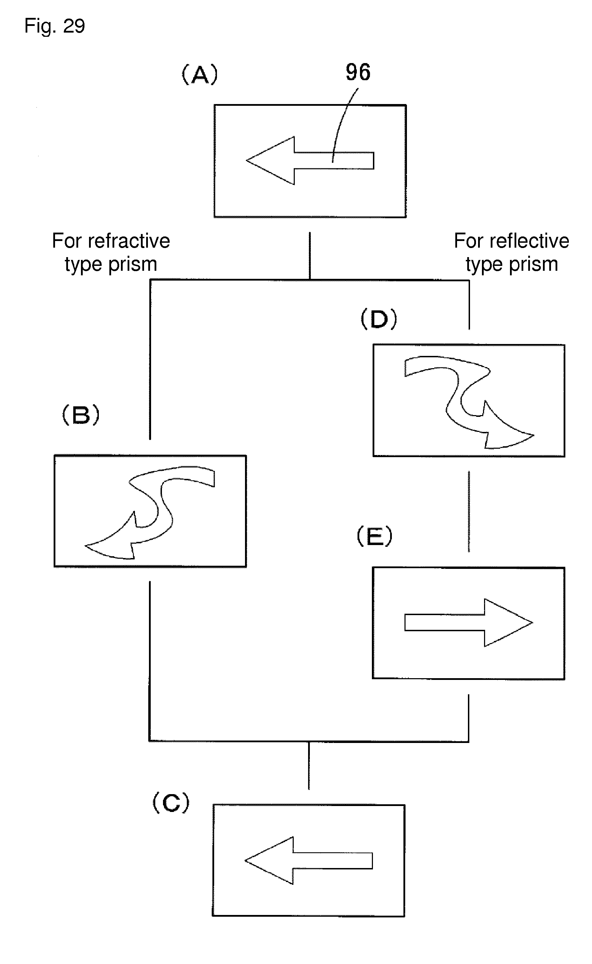

An image processor 94 used in a wide-angle imaging device 92 will be described below with reference to Figs. 26 to 29(E). The image photographed with the camera 22 through the refractive type or reflective type wide-angle imaging device 92 has distortion. For example, in the case that a photographing object 96 in Fig. 29(A) is photographed, the image obtained through a refractive type prism 93 is distorted as illustrated in Fig. 29(B), and the image obtained through the reflective type prism 93 is distorted as illustrated in Fig. 29(D). Accordingly, the image processor 94 constructed with a microprocessor performs image processing on image data output from the camera 22 such that the distorted image becomes the image close to the original photographing object. A memory 95 is used in order to exchange data with the image processor 94 or to temporarily store the image data.

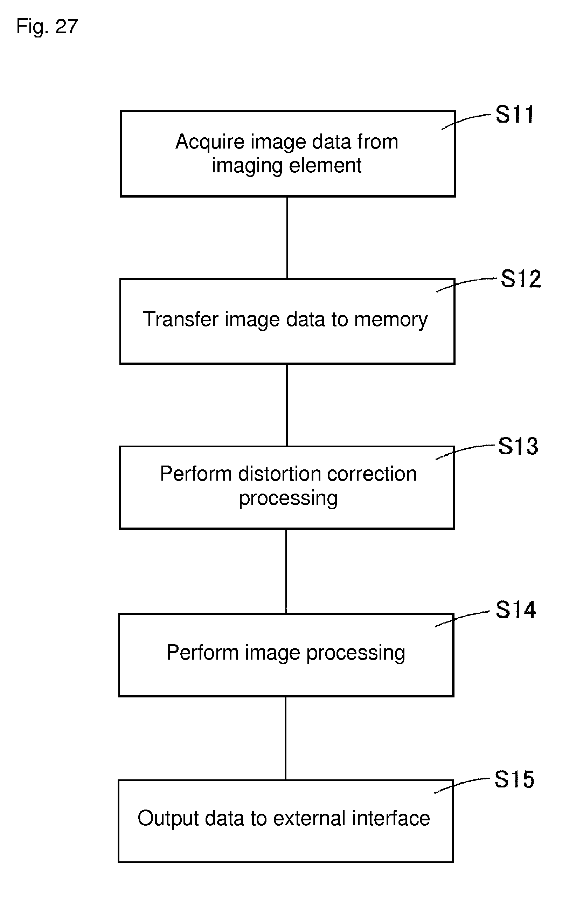

Fig. 27 illustrates an image processing process performed by the image processor 94 when only the refractive type prism is used. When acquiring the image data from the imaging element 26 (Step S11), the image processor 94 transfers the acquired image data to the memory 95 (Step S12). The image processor 94 performs distortion correction processing on the image data of the memory 95 (Step S13). As a result, the distorted image in Fig. 29(B) is corrected by rearranging the positions of the pieces of pixel data, and the distortion is removed like the image in Fig. 29(C). Then, the image processor 94 performs the image processing for high definition of the image, face recognition, and other purposes (Step S14), and the image processor 94 outputs the post-image-processing data to an external interface (Step S15).

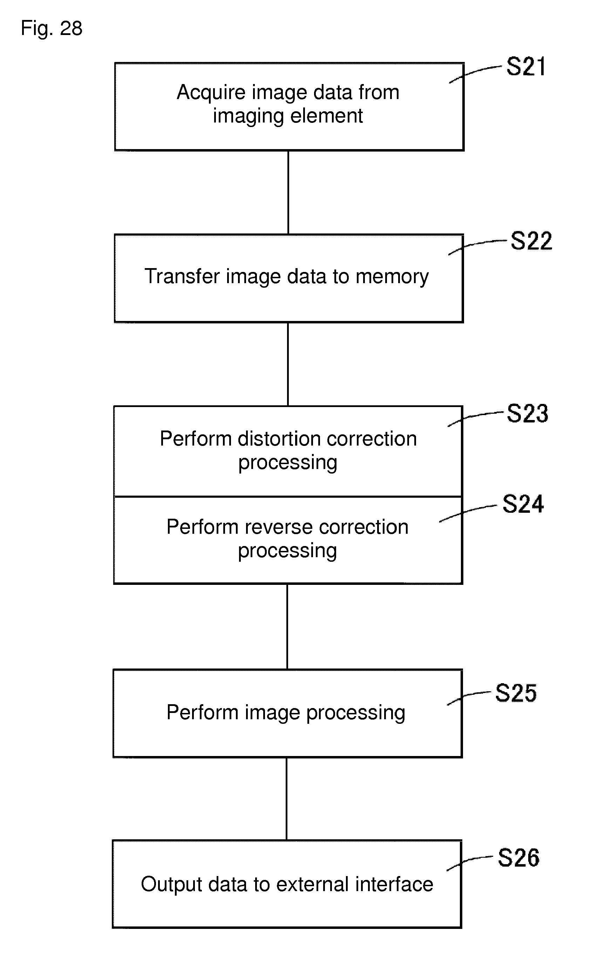

Fig. 28 illustrates an image processing process performed by the image processor 94 when the reflective type prism is used. After acquiring the image data from the imaging element 26 (Step S21), the image processor 94 transfers the acquired image data to the memory 95 (Step S22). The image processor 94 performs the distortion correction processing on the image data of the memory 95 (Step S23). As a result, from the distorted image in Fig. 29(D), the distortion is removed like the image in Fig. 29(E). Because the image obtained through the reflective type prism is reversed, the image processor 94 further performs reverse correction processing on the image (Step S24), and the orientation of the image is corrected as illustrated in Fig. 29(C). Then, the image processor 94 performs the image processing for the high definition of the image, the face recognition, and other purposes (Step S25), and the image processor 94 outputs the post-image-processing data to the external interface (Step S26).

### (Prism)

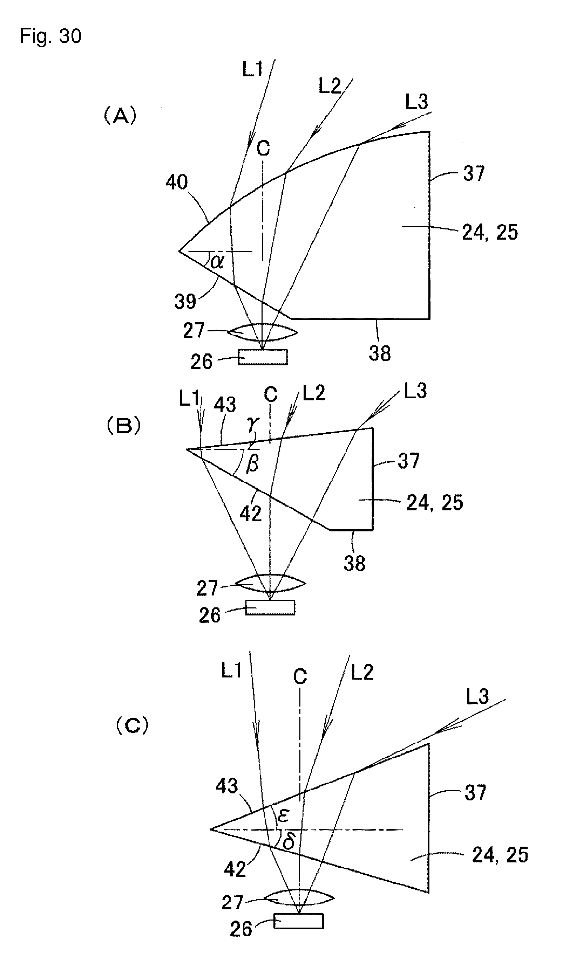

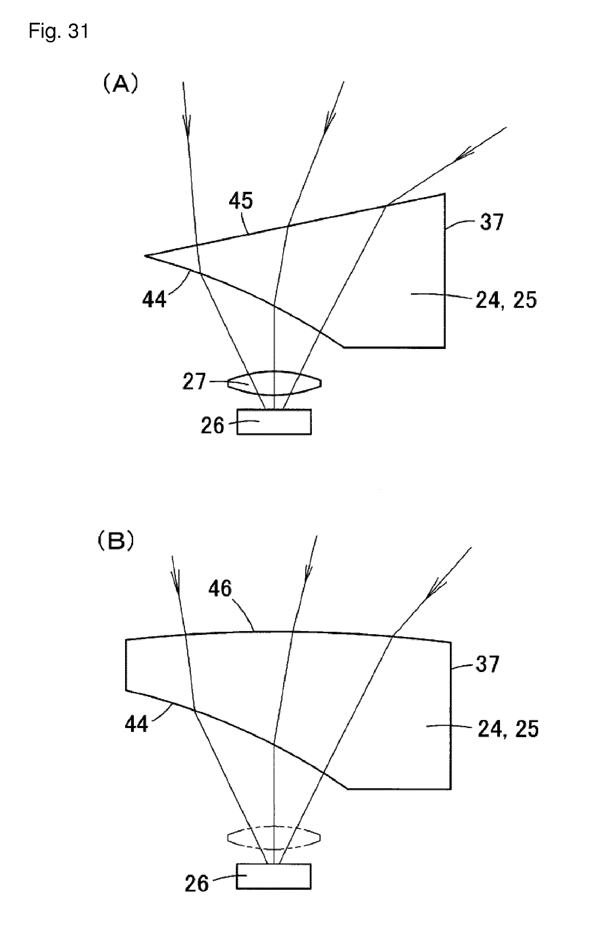

Prisms having various shapes can be used as the first and second prisms 24 and 25 used in each embodiment. Figs. 30(A) to 30(C) and Figs. 31 (A) and 31 (B) illustrate several examples in various prisms 24 and 25. The first and second prisms 24 and 25 are not limited to the prisms in Figs. 30(A) to 30(C) and Figs. 31 (A) and 31 (B). Figs. 30(A) to 30(C) and Figs. 31 (A) and 31 (B) show two-dimensional shapes of the prisms 24 and 25, and any horizontal sectional shape of the prism 24 and 25 is identical to the shape shown in any of Figs. 30(A) to 30(C) and 31(A) and 31(B).

In the prisms 24 and 25 (the prisms of the first embodiment) of Fig. 30(B), the back surface side is constructed with the back surface 38 and rearward-inclined surface 42 (flat surface) having an inclination of β = 30° with respect to the back surface 38, and the front surface side is constructed with a forward-inclined surface 43 (flat surface) having an inclination of γ = 7° with respect to the back surface 38. The prisms 24 and 25 have a refractive index of 1.5. Table 1 illustrates behaviors of light beams L1, L2, and L3 incident on the lens 27 at angles of +23.5°, 0°, and -23.5° with respect to the optical axis C of the lens 27 when the light beams L1, L2, and L3 pass through the prisms 24 and 25 in Fig. 30(B).

**[Table 1]**

| | Incident light | Refracted light (rearward-inclined surface) | Refracted light (forward-inclined surface) | Bending angle |
|---|---|---|---|---|
| Light beam L1 | 23.5° | 2.4° | 0.1° | 23.4° |
| Light beam L2 | 0° | -10.5° | -19.9° | 19.9° |
| Light beam L3 | -23.5° | -25.7° | -47.1° | 23.6° |

In Table 1, a numerical value indicated in a field of the refracted light (rearward-inclined surface) expresses the angle formed by each of the light beams L1, L2, and L3 incident on the prisms 24 and 25 from the rearward-inclined surface 42 with respect to the optical axis C. In Table 1, a numerical value indicated in a field of the refracted light (forward-inclined surface) expresses the angle formed by each of the light beams L1, L2, and L3 output to the outside of the prism from the forward-inclined surface 43 with respect to the optical axis C. In Table 1, a numerical value indicated in a field of an bending angle expresses a change in direction of each of the light beams L1, L2, and L3 passing through the prisms 24 and 25 (that is, a change in light beam direction between each of the light beams L1, L2, and L3 before the incidence on the rearward-inclined surface 42 and each of the light beams L1, L2, and L3 after the output from the forward-inclined surface 43).

In the prisms 24 and 25 of Fig. 30(C), the back surface side is constructed with the rearward-inclined surface 42 (flat surface) having the inclination of δ = 15°, and the front surface side is constructed with the forward-inclined surface 43 (flat surface) having the inclination of ε = 20°. The prisms 24 and 25 have the refractive index of 1.5. Table 2 illustrates behaviors of light beams L1, L2, and L3 incident on the lens 27 at angles of +25°, 0°, and -25° with respect to the optical axis C of the lens 27 when the light beams L1, L2, and L3 pass through the prisms 24 and 25 in Fig. 30(C). In Table 2, the numerical values indicated in the fields of the refracted light (rearward-inclined surface), the refracted light (forward-inclined surface), and the bending angle are identical to those in Table 1.

**[Table 2]**

| | Incident light | Refracted light (rearward-inclined surface) | Refracted light (forward-inclined surface) | Bending angle |
|---|---|---|---|---|
| Light beam L1 | 25° | 10.4° | 5.5° | 19.53° |
| Light beam L2 | 0° | -5.1° | 19.5° | 19.45° |
| Light beam L3 | -25° | -21.7° | -65.4° | 40.43° |

Table 3 illustrates behaviors of light beams L1, L2, and L3 incident on the lens 27 at angles of +25°, 0°, and -25° with respect to the optical axis C of the lens 27 when the inclined surface 39 has the inclination of α =30° with respect to the back surface 38 and the refractive index of 1.5 in the prisms 24 and 25 of Fig. 30(A).

**[Table 3]**

| | Incident light | Refracted light (inclined surface) | Refracted light (curved surface) | Bending angle | Tangential angle |
|---|---|---|---|---|---|
| Light beam L1 | 25° | 3.1° | -17.7° | 42.7° | 35.2° |
| Light beam L2 | 0° | -10.5° | -37.1° | 37.1° | 26° |
| Light beam L3 | -25° | -26.7° | -67° | 44° | 14.6° |

In Table 3, the numerical values indicated in the fields of the refracted light (rearward-inclined surface), the refracted light (forward-inclined surface), and the bending angle are identical to those in Table 1. The numerical value indicated in the field of the tangential angle expresses an angle formed between a tangent of the curved surface 40 at a point at which each of the light beams L1, L2, and L3 passes through the curved surface 40 and the direction orthogonal to the optical axis C.

In the prisms 24 and 25 constructed only with the flat surfaces as illustrated in Figs. 30(B) and 30(C), an interval between the bending angles varies largely over the entire angle of view (the incident light ranging from -23.5° to +23.5° in the prisms 24 and 25 of Fig. 30(B), and the incident light ranging from -25° to +25° in the prisms 24 and 25 of Fig. 30(C)), and the photographed image has the large distortion. On the other hand, when the front surface (the surface on the photographing object side) of the prisms 24 and 25 is constructed with a convex curve as illustrated in Fig. 30(A), the variation in interval between the bending angles can be decreased over the entire angle of view, and the distortion of the photographed image is also constrained. When the prisms 24 and 25 in Fig. 30(A) are not adjusted, there is a risk of generating a deviation of a focal position. However, the focal position can be adjusted by shifting the position of the lens 27 onto the side of the imaging element 26.

In the prisms 24 and 25 of Fig. 31 (A), the back surface is constructed with a concave curve 44, and the front surface is constructed with a flat surface 45. In the prisms 24 and 25 of Fig. 31 (B), the back surface is constructed with the concave curve 44, and the front surface is constructed with a convex curve 46. Even in the prisms 24 and 25 of Figs. 31 (A) and 31 (B), the variation in interval between the bending angles can be decreased over the entire angle of view, and the distortion of the photographed image can be constrained. When one of the front surface and the back surface of the prism is constructed with the curved surface in the region through which the light beam passes, the variation in interval between the bending angles can be decreased, and the distortion of the photographed image can also be constrained. In the case that both the front surface and the back surface are constructed with the curved surfaces like the prisms 24 and 25 in Fig. 31 (B), design to eliminate the lens 27 can be made because the image can be formed by the prisms 24 and 25.

The refractive type prism is described above, and the same holds true for the reflective type prism. That is, the reflective type prism can be formed by adjusting the inclination angle of the surface on the front surface side based on the prisms in Figs. 30(A) to 30(C) and 31(A) and 31(B).

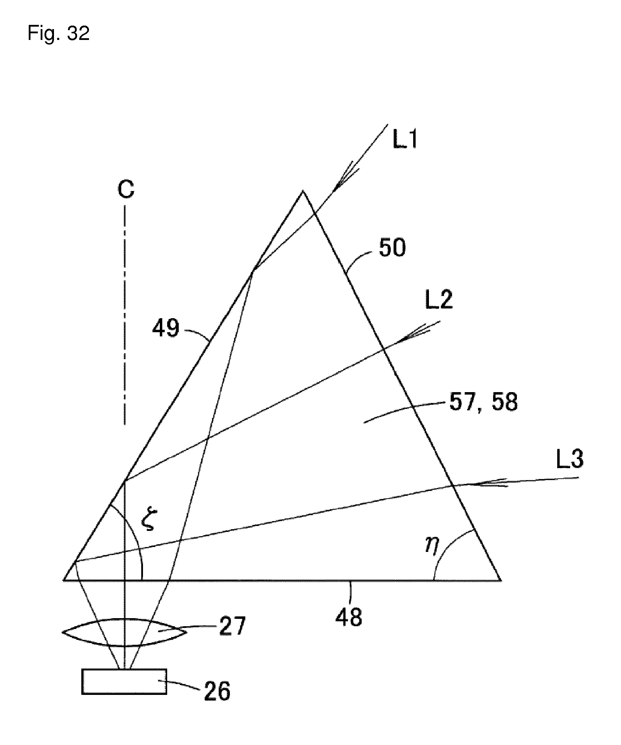

Fig. 32 illustrates a design example of the reflective type prisms 57 and 58. The prisms 57 and 58 in Fig. 32 include a back surface 48, a first inclined surface 49 having the inclination of ζ = 58.5° with respect to the back surface 48, and a second inclined surface 50 having the inclination of η = 63° with respect to the back surface 48. The prisms 57 and 58 have the refractive index of 1.5. Table 4 illustrates behaviors of the light beams L1, L2, and L3 incident on the lens 27 at the angles of +23.5°, 0°, and -23.5° with respect to the optical axis C of the lens 27 when the light beams L1, L2, and L3 pass through the prisms 57 and 58 in Fig. 32.

**[Table 4]**

| | Incident light | Refracted light (back surface) | Reflected light (first inclined surface) | Refracted light (second inclined surface) | Bending angle |
|---|---|---|---|---|---|
| Light beam L1 | 23.5° | - | - | - | - |
| Light beam L2 | 0° | 0° | -63° | 0° | 63° |
| Light beam L3 | -23.5° | - | - | - | - |

In Table 4, the numerical value indicated in the field of the refracted light (back surface) expresses the angle formed by the light beam L2 incident on the prisms 57 and 58 from the back surface 48 with respect to the optical axis C. In Table 4, the numerical value indicated in the field of the reflected light (first inclined surface) expresses the angle formed by the light beam L2 reflected from the first inclined surface 49 with respect to the optical axis C. In Table 4, the numerical value indicated in the field of the refracted light (second inclined surface) expresses the angle formed by the light beam L2 reflected from the second inclined surface 50 with respect to the optical axis C. In Table 4, the numerical value indicated in the field of the bending angle expresses the change in direction of the light beam L2 passing through the prisms 57 and 58 (that is, the change in light beam direction between the light beam L2 before the incidence on the back surface 48 and the light beam L2 after the output from the second inclined surface 50). Although the numerical values are not indicated in Table 4 for the light beams L1 and L3, the numerical values for the light beams L1 and L3 can easily be obtained by calculation. However, because the change in light beam direction during the transmission of the light through the back surface 48 or the second inclined surface 50 is smaller than the change in light beam direction caused by the reflection of the light from the first inclined surface 49, the bending angles of the light beams L1 and L3 have a value of about ±23.5° with respect to the bending angle of the light beam L2.

A plurality of prisms may integrally be formed in the case that a plurality of prisms are used. For example, Figs. 7(A) and 7(B) illustrate the visual field switching optical system 23 in which the refractive type prisms are integrally formed, and Figs. 19(A) to 21(D) illustrate the visual field switching optical system 23 in which the refractive type prism and the reflective type prism are integrally formed.

### (Arrangement of imaging element)

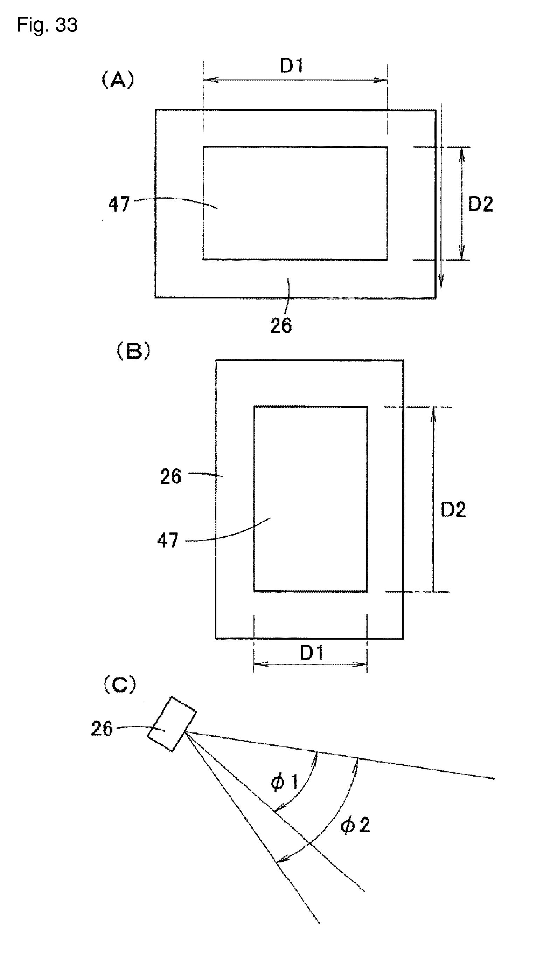

The arrangement of the imaging element 26 of each embodiment will be described below. Generally, the vertical length differs from the horizontal length in the pixel region of the imaging element. For example, the pixel region of the imaging element has an aspect ratio of 9 : 16 or 3 : 4. As illustrated in Fig. 33(A), the imaging element 26 is frequently used in a landscape-oriented manner such that a horizontal length D1 of the pixel region 47 is larger than a vertical length D2. However, in the wide-angle imaging device 21, as illustrated in Fig. 33(B), preferably the imaging element 26 is used in the portrait-oriented manner such that the horizontal length D1 of the pixel region 47 is larger than the vertical length D2. When the imaging element 26 is used in the portrait-oriented manner, as illustrated in Fig. 33(C), the imaging element 26 has a vertical angle of view ϕ2, and the vertical angle of view ϕ2 is wider than a vertical angle of view ϕ1 that is obtained when the imaging element 26 is used in a landscape-oriented manner. In the wide-angle imaging device 21, the horizontal angle of view is widened by the visual field switching optical system 23. Therefore, the imaging element 26 is used in the portrait-oriented manner to widen the vertical angle of view, which allows the wide-angle imaging device 21 to photograph the wider range. Since the purpose of the photographing with the wide-angle imaging device 21 is the image processing for the object detection, there is no problem even if the image photographed with the imaging element is rotated by 90°.

### (Applications)

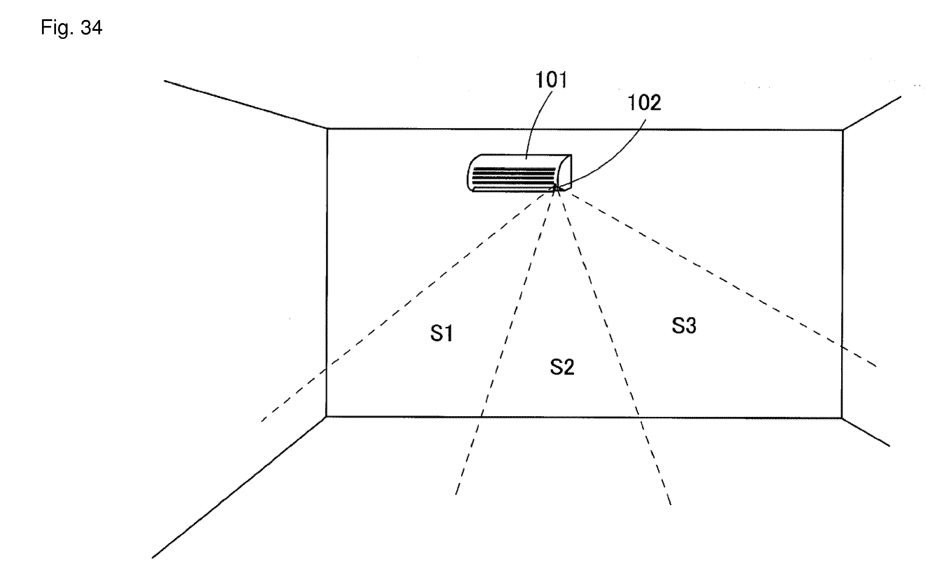

Fig. 34 illustrates an air conditioner 101 provided with the wide-angle imaging device 102 of the present invention. In the embodiment, a position of a person or the number of persons in a room is monitored by the wide-angle imaging device 102, and an indoor setting temperature is automatically adjusted according to the number of persons or air is not directly blown in the direction in which the person exists. When the wide-angle imaging device 102 of the present invention is used in the air conditioner 101, the room is divided into a plurality of regions S1, S2, and S3 even if the room is spacious, and whether the person exists in each of the regions S1, S2, and S3 can sequentially be monitored.

The wide-angle imaging device of the present invention can be incorporated in an electronic instrument. Examples of the electronic instrument in which the wide-angle imaging device is incorporated include an image sensor, a human body detection sensor, a face detection sensor, a car-mounted sensor, and other sensors. The wide-angle imaging device can also be incorporated in large-size electronic instruments such as an air conditioner and other home appliances.

## Claims

1. A wide-angle imaging device configured to photograph a range wider than an angle of view of an imaging element, the wide-angle imaging device comprising:
the imaging element configured to photograph an image;
a visual field switching optical system comprising one or two or more optical elements, the optical element comprising a refractive type prism that refracts light incident from a visual field in a direction inclined with respect to an optical axis direction to collect the light to the imaging element; and
an optical system driving mechanism configured to move the optical element of the visual field switching optical system.

2. The wide-angle imaging device according to claim 1, wherein the visual field switching optical system comprises the two or more optical elements, and
the optical system driving mechanism moves the visual field switching optical system to selectively locate one of the optical elements of the visual field switching optical system on the optical axis.

3. The wide-angle imaging device according to claim 1, wherein an image of the optical axis direction can be photographed with the imaging element, with all the optical elements of the visual field switching optical system being located in positions shifted from the optical axis.

4. The wide-angle imaging device according to claim 1, wherein the optical system driving mechanism moves each of the optical elements by rotating the visual field switching optical system such that each of the optical elements passes over the optical axis.

5. The wide-angle imaging device according to claim 1, wherein the optical system driving mechanism moves each of the optical elements by linearly moving the visual field switching optical system such that each of the optical elements passes over the optical axis.

6. The wide-angle imaging device according to claim 1, wherein the visual field switching optical system comprises a reflective type prism or a mirror as the optical element, the reflective type prism or the mirror reflecting the light incident from the visual field in the direction inclined with respect to the optical axis direction to collect the light to the imaging element, and
light incident from a visual field in a relatively small inclination direction with respect to the optical axis is collected to the imaging element by the refractive type prism, and light incident from a visual field in a relatively large inclination direction with respect to the optical axis is collected to the imaging element by the reflective type prism or the mirror.

7. The wide-angle imaging device according to claim 1, wherein a plurality of prisms in the optical elements constituting the visual field switching optical system are integrally formed.

8. The wide-angle imaging device according to claim 1, wherein a vertical length is longer than a horizontal length in a pixel region of the imaging element.

9. The wide-angle imaging device according to claim 1, wherein a surface on the imaging element side is constructed with a concave curve in the refractive type prism.

10. The wide-angle imaging device according to claim 1, wherein a surface on a photographing object side is constructed with a convex curve in the refractive type prism.

11. The wide-angle imaging device according to claim 1, wherein an unnecessary portion of each of the optical elements is removed with only a portion constituting an optical path of a light beam necessary for photographing being left, and the optical elements in which the unnecessary portions are removed overlap each other when the optical elements are viewed from the side surface side with respect to an array direction of the optical elements with the optical elements in which the unnecessary portions are removed being adjacent to each other.

12. The wide-angle imaging device according to claim 11, wherein the optical elements are arrayed in line when viewed in the optical axis direction, and
the optical elements are arranged such that visual field directions of the light beams incident on the imaging element through the optical elements are in alternate and opposite directions across the array direction of the optical elements.

13. The wide-angle imaging device according to claim 1, wherein images of respective visual field directions are arrayed and displayed on a monitor.

14. A wide-angle imaging device configured to photograph a range wider than an angle of view of an imaging element, the wide-angle imaging device comprising:
the imaging element configured to photograph an image; and
two or more optical elements comprising refractive type prisms that refract light beams incident from visual fields in different directions inclined with respect to an optical axis direction to collect the light beams to the imaging element,
wherein the light beams, from respective visual field directions, passing through the optical elements are collected to different regions of the imaging element.

15. A wide-angle imaging device configured to photograph a range wider than an angle of view of an imaging element, the wide-angle imaging device comprising:
the imaging element configured to photograph an image; and
one or two or more optical elements comprising a refractive type prism that refracts light incident from a visual field in a direction inclined with respect to an optical axis direction to collect the light to the imaging element,
wherein light in the optical axis direction that does not pass through the optical element is collected to a region different from a region to which the light from the visual field direction passing through the optical element is collected in the imaging element.

16. The wide-angle imaging device according to claim 14 or 15, further comprising:
a reflective type prism or a mirror that reflects the light incident from the visual field in the direction inclined with respect to the optical axis direction to collect the light to a partial region of the imaging element,
wherein light incident from a visual field in a relatively small inclination direction with respect to the optical axis is collected to the imaging element by the refractive type prism, and light incident from a visual field in a relatively large inclination direction with respect to the optical axis is collected to the imaging element by the reflective type prism or the mirror.

17. The wide-angle imaging device according to any one of claims 1, 14, and 15, wherein distortion correction processing is performed on images of different visual field directions, the images being photographed with the imaging element, and image processing is performed on the images.

18. The wide-angle imaging device according to claim 6 or 16, wherein distortion correction processing is performed on images of different visual field directions, the images being photographed with the imaging element, reverse correction processing is performed on images of light which is reflected by the reflective type prism or the mirror and collected to the imaging element, and image processing is performed on the images.

19. An electronic instrument comprising the wide-angle imaging device according to any one of claims 1, 14, and 15.
